# EUROPÄISCHE PATENTSCHRIFT

(11) **EP 2 726 753 B1**
(45) Veröffentlichungstag und Bekanntmachung des Hinweises auf die Patenterteilung: **30.05.2018**
(21) Anmeldenummer: 12740297.2
(22) Anmeldetag: 28.06.2012
(51) Int. Cl.: F16D 13/64

(54) **NASSKUPPLUNG FÜR EIN KRAFTRAD**
WET CLUTCH FOR A MOTORCYCLE
EMBRAYAGE HUMIDE POUR UNE MOTOCYCLETTE

(30) Priorität: 30.06.2011 DE 102011106021
(43) Veröffentlichungstag der Anmeldung: 07.05.2014
(73) Patentinhaber: Schaeffler Technologies AG & Co. KG, 91074 Herzogenaurach (DE)
(72) Erfinder: RABER, Christoph, 66564 Ottweiler-Steinbach (DE); GANTER, Rainer, 77830 Bühlertal (DE); CHAMBRION, Martin, F-67850 Herrlisheim (FR); KELLER, Marion, 76199 Karlsruhe (DE); DECKER, Florian, 77815 Bühl (DE); RITTER, Raimund, 91074 Herzogenaurach (DE); STÖLZLE, Jürgen, 91056 Erlangen (DE); SPERBER, Matthias, 96193 Wachenroth (DE); KOZLOWSKI, Frank, 82256 Fürstenfeldbruck (DE); RAATZ, Joachim, 77815 Bühl (DE)
(86) Internationale Anmeldenummer: PCT/DE2012/000651
(87) Internationale Veröffentlichungsnummer: WO 2013/000455

(56) Entgegenhaltungen:
- DE-A1- 19 904 134
- DE-A1- 19 928 513
- DE-A1-102004 022 920
- DE-A1-102006 031 786
- DE-A1-102008 054 473

## Beschreibung

Die Erfindung betrifft eine Nasskupplung, insbesondere eine Mehrscheiben-Nasskupplung für ein Kraftrad.

Eine Nasskupplung für ein Kraftrad umfasst üblicherweise einen Innenkorb und einen Außenkorb, die koaxial auf einer Getriebehauptwelle angeordnet sind. Mit dem Außenkorb steht eine Anzahl erster Reibscheiben und mit dem Innenkorb eine Anzahl zweiter Reibscheiben in Eingriff, wobei die ersten und zweiten Reibscheiben koaxial in alternierender Reihenfolge angeordnet sind. Ein Kraftschluss zwischen dem Innenkorb und dem Außenkorb kann selektiv hergestellt werden, indem der Stapel der ersten und zweiten Reibscheiben axial aufeinander gepresst wird. Ein Drehmoment eines Antriebsmotors wird üblicherweise mittels einer Stirnradverzahnung in den Außenkorb eingetragen und über eine Innenverzahnung des Innenkorbs an die Getriebehauptwelle ausgekoppelt. Dabei läuft die gesamte Kupplung in einem Ölbad, das üblicherweise auch das Getriebe umgibt.

Zur vorteilhaften Konstruktion einer solchen Nasskupplung sind mehrere Vorschläge gemacht worden. Um in einem Kraftrad eingesetzt zu werden, muss die Kupplung robust und kompakt sein, außerdem soll sie mit geringem Aufwand in großen Stückzahlen herstellbar und möglichst an verschiedenen Antriebsmotoren einsetzbar sein. Vorzugsweise sollte die Kupplung auch die Anbindung eines Tretkurbel-Anlassers ("Kickstarter") unterstützen, beispielsweise durch ein drehmomentschlüssig mit dem Außenkorb verbundenes Kickstarterzahnrad.

Eine übliche Ausführungsform für die beschriebene Kupplung verwendet Teile aus Leichtmetall-Druckguss, insbesondere für den Innen- bzw. Außenkorb. Das Außenzahnrad zur Einkopplung des Motormoments in den Außenkorb ist einstückig mit dem Kickstarterzahnrad ausgebildet. Die axiale Anpresskraft auf die Reibscheiben wird mittels Schraubenfedern bereitgestellt. Diese Kupplung ist relativ aufwendig in der Herstellung, weist ein hohes Massenträgheitsmoment auf und die Anpresskraft der Schraubenfedern variiert über eine verschleißbedingte Höhenabnahme der Reibscheiben. Es ist daher Aufgabe der Erfindung, eine Nasskupplung für ein Kraftrad bereitzustellen, die in verbesserter Weise die oben beschriebenen Anforderungen erfüllt.

Die Erfindung löst diese Aufgabe mittels einer Nasskupplung mit den Merkmalen von Anspruch 1. Unteransprüche geben bevorzugte Ausführungsformen an. Offenbarungen DE19928513 und DE 19904134 sind als relevantester Stand der Technik angesehen.

### Offenbarung der Erfindung

Eine erfindungsgemäße Nasskupplung für ein Kraftrad, insbesondere ein Kleinkraftrad, umfasst einen Außenkorb mit einer ersten Verzahnung als Eingangsseite der Nasskupplung, einen zum Außenkorb koaxialen Innenkorb mit einer zweiten Verzahnung als Ausgangsseite der Nasskupplung, erste Reibelemente, die drehmomentschlüssig mit dem Außenkorb verbunden sind, zweite Reibelemente, die drehmomentschlüssig mit dem Innenkorb verbunden sind, wobei die ersten und zweiten Reibelemente axial alternierend zwischen dem Innenkorb und dem Außenkorb angeordnet sind, und ein Anpresselement zum axialen Komprimieren der ersten und zweiten Reibelemente, um einen Drehmomentschluss zwischen der Eingangsseite und der Ausgangsseite herzustellen. Dabei sind der Innenkorb und/oder der Außenkorb im Wesentlichen aus einem oder mehreren Blechteilen herstellbar.

Dadurch ist es möglich, eine Nasskupplung für ein Kleinkraftrad bereitzustellen, das bei geringem Bauraum verringerte Herstellungskosten aufweist. Insbesondere für ein Kleinkraftrad der ca. 200 cm³-Klasse kann die vorgeschlagene Nasskupplung in großen Stückzahlen leicht herstellbar sein. Ein aufwendiges Guss- bzw. Druck-Gussverfahren zur Herstellung von Elementen der Nasskupplung kann so verzichtbar sein. Unter Einsatz der Nasskupplung kann eine Massenfertigung von Kleinkrafträdern, beispielsweise für den asiatischen Markt, erleichtert sein. Außerdem kann ein Massenträgheitsmoment der vorgeschlagenen Nasskupplung geringer als das einer konventionellen Kupplung sein. Erfindungsgemäss umfasst einer der Körbe ein Tiefziehteil. Dadurch kann der Innen- bzw. Außenkorb einfach und rasch aus einem Blech herstellbar sein, sodass sich ein einfacher, robuster und präziser Kupplungskorb ergeben kann. Ein Verzahnungselement zur Ein- bzw. Ausleitung von Kraft kann an separat hergestellt und an den Innen- bzw. Außenkorb angefügt werden.

In einer Ausführungsform ist ein Anlasserzahnrad koaxial formschlüssig mit dem Außenkorb verbunden. Das Anlasserzahnrad kann insbesondere zum Eingriff mit einem Tretkurbel-Anlasser eingerichtet sein. Durch die formschlüssige Verbindung des Anlasserzahnrads mit dem Außenkorb kann ein beträchtlicher Teil des Außenkorbs aus dem Blech hergestellt sein, während die Verzahnungen der Eingangsseite und des Anlasserzahnrads Material sparend beispielsweise aus Guss-, Dreh- oder Frästeilen realisiert sein können.

Insbesondere kann das Anlasserzahnrad integriert mit einer Gleitlagerbuchse zur Lagerung des Außenkorbs ausgeführt sein. Der Außenkorb kann auf diese Weise kompakt, herstellungs- und montagefreundlich realisiert sein. Durch die Vorsehung des Anlasserzahnrads im Bereich der Gleitlagerbuchse kann das Anlasserzahnrad mit einem relativ geringen Umfang dimensioniert sein, was vorteilhaft für die Anpassung eines Betätigungswegs der Tretkurbel an einen Verdrehwinkel der Nasskupplung, und damit einen Kurbelwinkel des Antriebsmotors, ausgenutzt werden kann.

In einer bevorzugten Ausführungsform umfasst das Anpresselement eine Membranfeder. Die Membranfeder kann vorzugsweise ebenfalls aus einem Blechteil herstellbar sein. Durch die Verwendung ähnlicher Verfahrensschritte zur Herstellung der Membranfeder und wenigstens eines der Kupplungskörbe können eine Fertigungsqualität der Nasskupplung insgesamt steigerbar und Herstellungskosten senkbar sein.

In einer weiter bevorzugten Ausführungsform ist ein elastisches Element zur drehelastischen Verbindung des Außenkorbs mit dem zugeordneten Verzahnungselement vorgesehen. Dadurch kann ein Ruckdämpfer implementiert sein, der dazu beitragen kann, Lastwechselreaktionen zu verringern oder Drehschwingungen abzubauen, die beispielsweise durch den Antriebsmotor in die Nasskupplung eingetragen werden können.

Vorzugsweise umfasst das elastische Element eine Anzahl radialer Blechlaschen. Dadurch kann die Verwendung von Stahlblech als Ausgangsmaterial zur Herstellung der Nasskupplung konsequent auf das elastische Element ausgedehnt werden. Dadurch können sich weitere herstellungstechnische Vorteile ergeben. In einer Ausführungsform können die Blechlaschen einstückig mit einem der beiden Kupplungskörbe ausgebildet sein.

Der Außenkorb kann einen zusätzlichen umlaufenden Ring zur Abstützung des Außenkorbs unter Fliehkraftbelastung umfassen. Die Gefahr eines Verbiegens oder Berstens des Außenkorbs unter hohen Drehzahlen kann dadurch verringert werden. So kann eine zusätzliche Sicherheitsreserve bereitgestellt werden, ohne einen signifikant gesteigerten Aufwand bezüglich des verwendeten Materials oder der Herstellung der Nasskupplung zu erfordern.

In einer besonders bevorzugten Ausführungsform ist eine Einrichtung zur Erzeugung einer axialen Vorspannung auf das Anpresselement vorgesehen, um eine verschleißbedingte Höhenabnahme der gestapelten ersten und zweiten Reibelemente zu kompensieren. Insbesondere im Vergleich zu einer konventionellen Kupplung mit Schraubenfedern kann so ein zur Betätigung der Kupplung erforderlicher Betätigungsweg über die Lebensdauer der Reibelemente im Wesentlichen konstant gehalten sein. Ein externer Mechanismus zum Ausgleich eines entsprechenden Betätigungsspiels, insbesondere ein manuell betätigter Mechanismus, kann dadurch entfallen. Dadurch kann eine Verwendungssicherheit der Nasskupplung bzw. eines Fahrzeugs, in dem die Nasskupplung verwendet wird, gesteigert sein.

### Kurze Beschreibung der Figuren

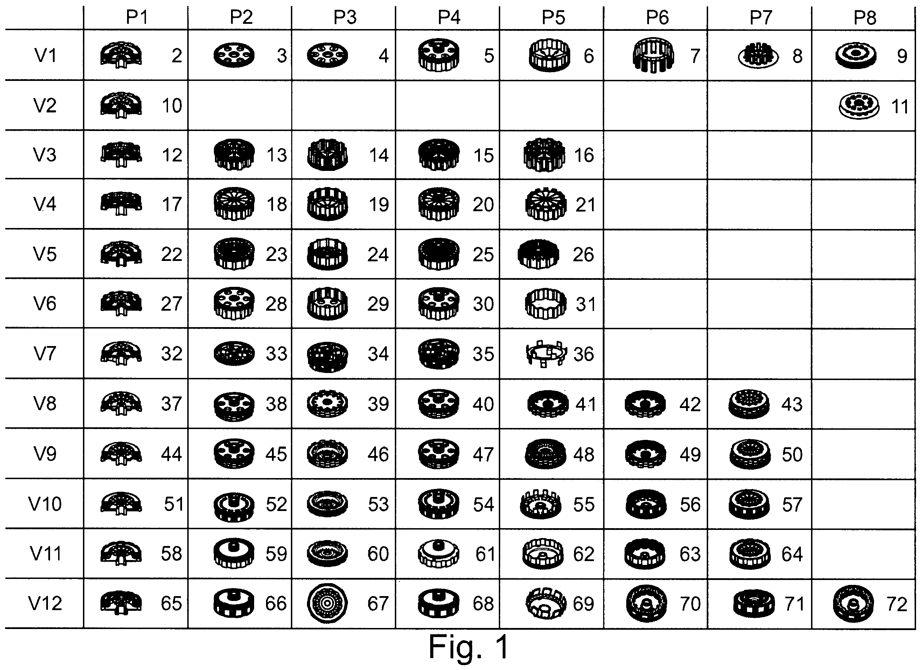

Die Erfindung wird nun mit Bezug auf die beigefügten Figuren genauer beschrieben. Dabei ist in Figur 1 eine Matrix angegeben, welche die Zuordnung der folgenden Figuren zu unterschiedlichen Ausführungsformen erleichtert.

Insgesamt werden 12 unterschiedliche Ausführungsformen V1 bis V12 beschrieben. Jede der Ausführungsformen wird durch acht Ansichten P1 bis P8 beschrieben. P1 zeigt die gesamte Konstruktion, P2 ein Zahnrad, das als Eingang der Nasskupplung dient, P3 eine Dämpfung des Zahnrads, P4 ein Anlasserzahnrad, P5 einen Außenkorb, P6 einen Innenkorb, P7 eine Befestigung des Innenkorbs an einem seiner axialen Enden, und P8 die Befestigung des Innenkorbs am anderen axialen Ende.

Einige der Ausführungsformen V1 bis V12 bauen aufeinander auf, sodass nicht alle Ansichten P1 bis P8 zwischen allen Ausführungsformen V1 bis V12 unterschiedlich sind. So stellt die Ausführungsform V1 eine Grundform dar, auf der die Ausführungsformen V2, V3 und V8 aufbauen. Variationen der Ausführungsform V3 finden sich in den Ausführungsformen V4 bis V7. V9 ist eine Variation der Ausführungsform A8, auf der die Ausführungsformen V10 und V11 aufbauen. V12 schließlich ist eine Variation der Ausführungsform V11.

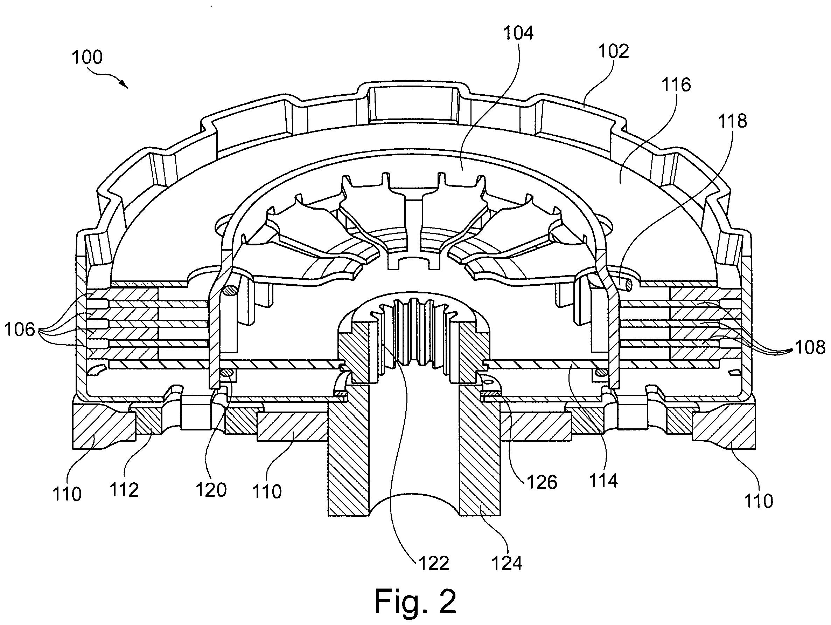

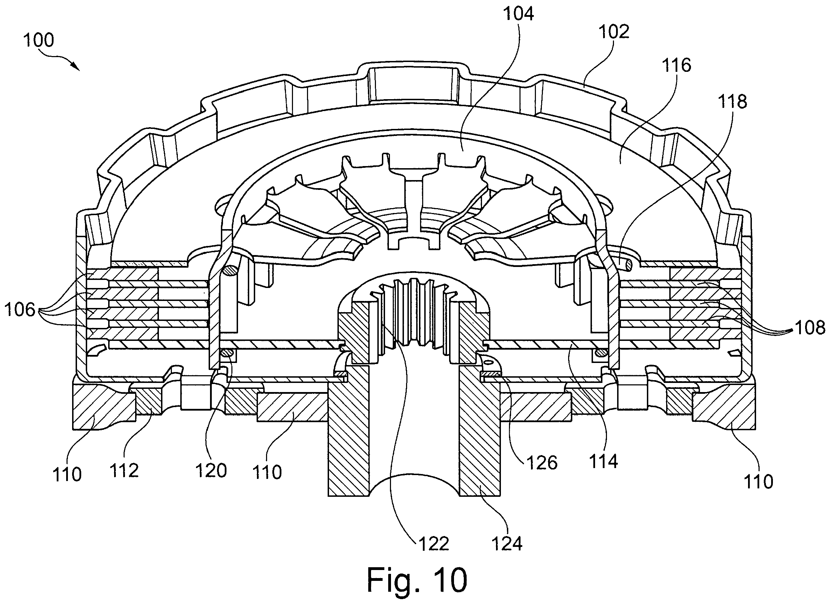

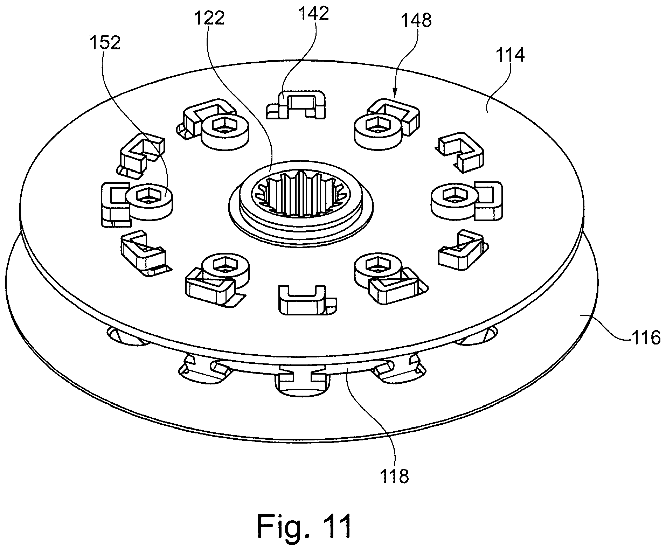

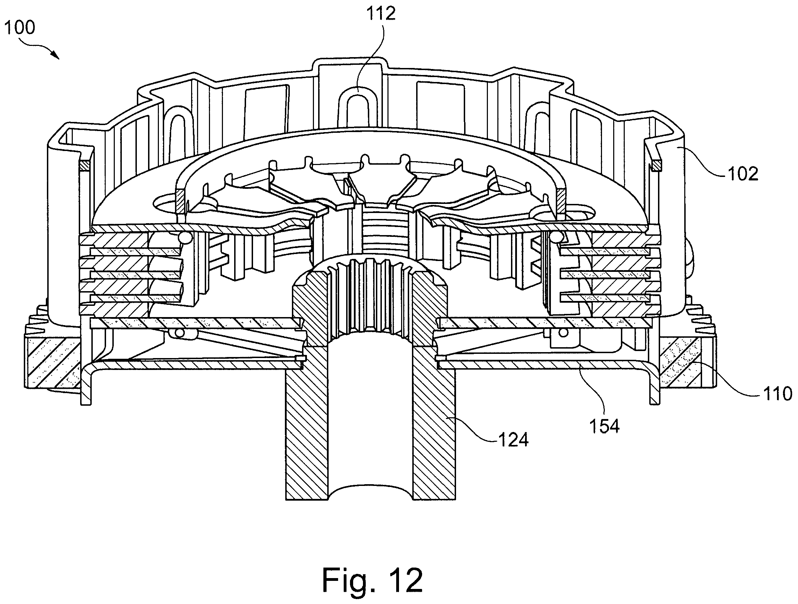

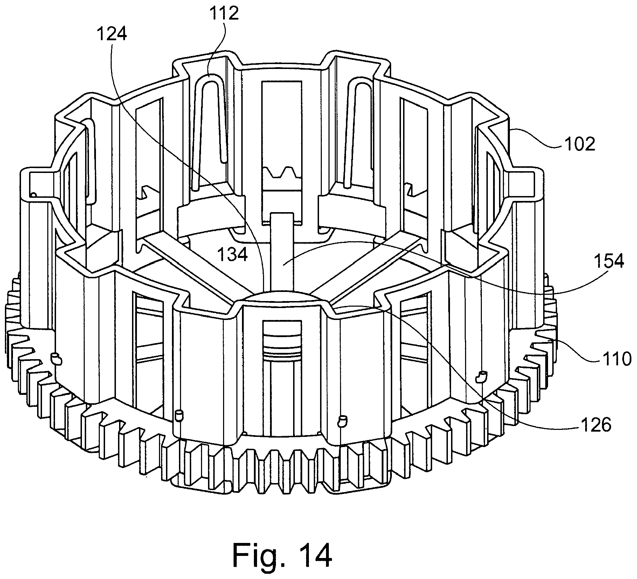

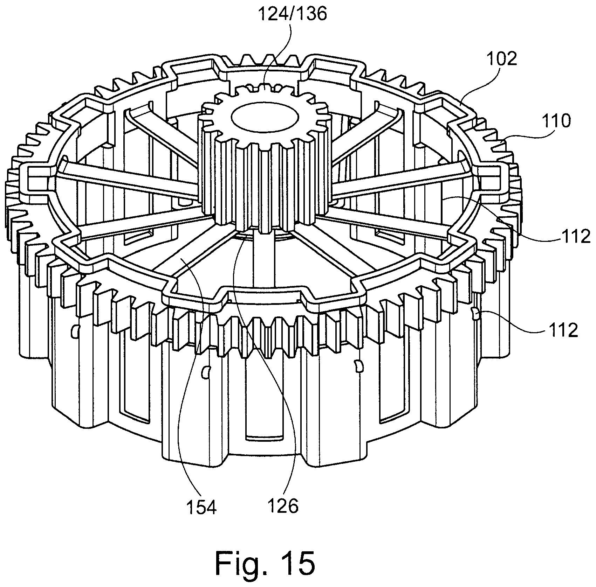

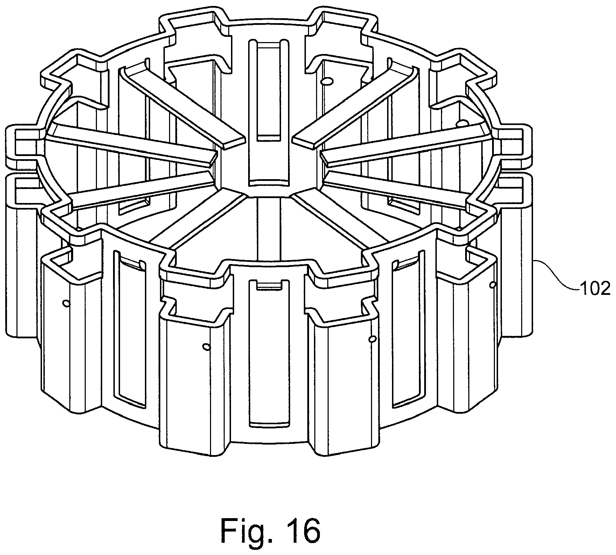

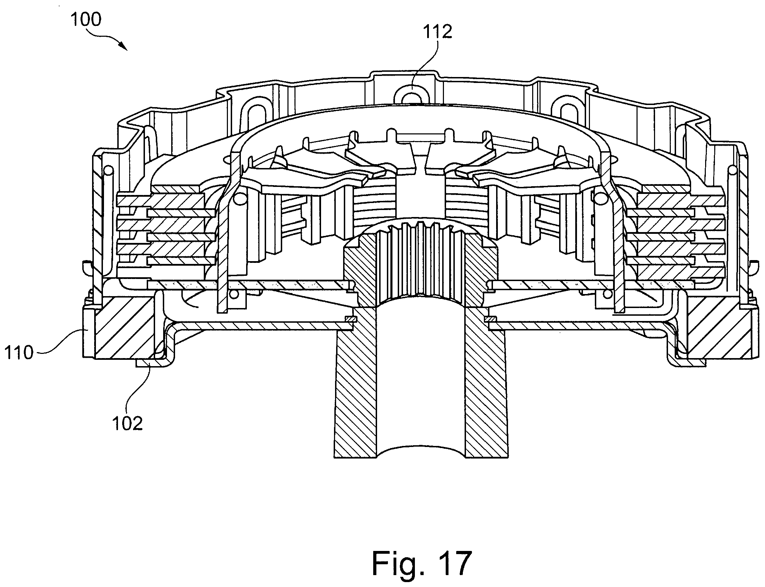

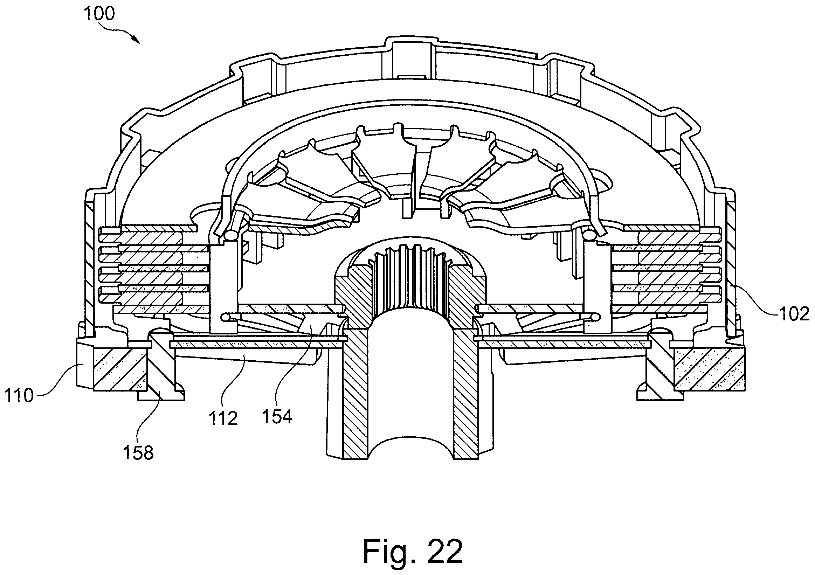

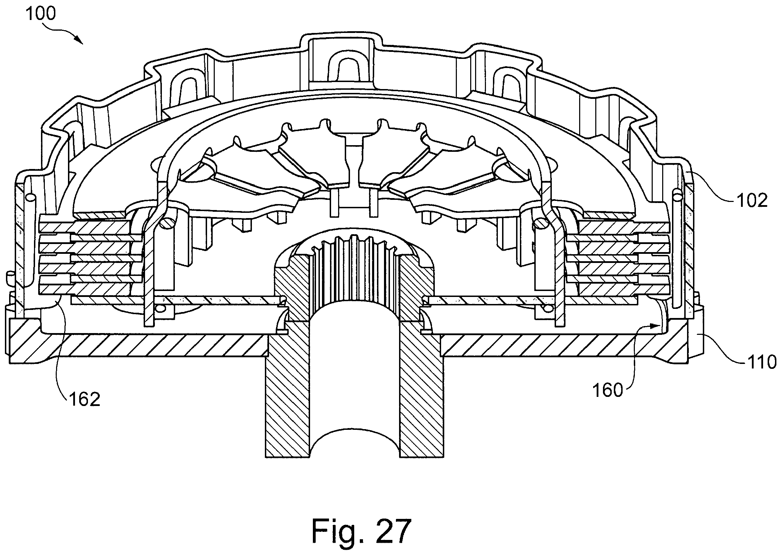

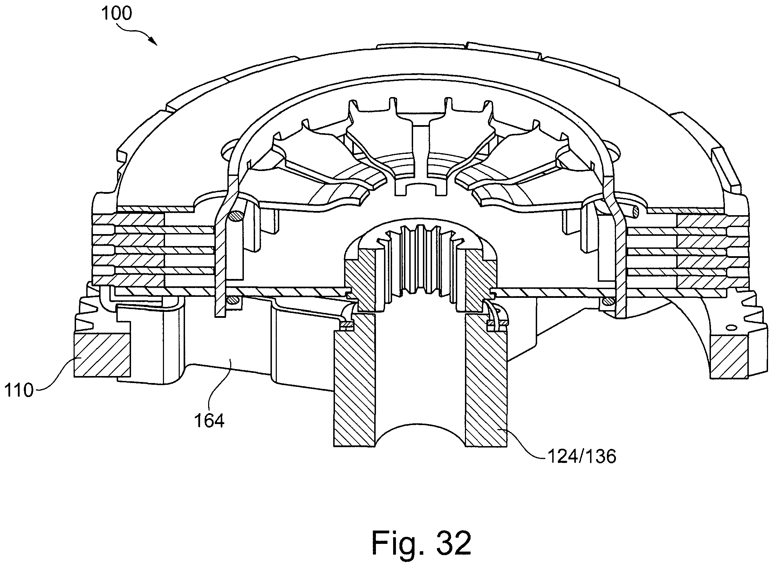

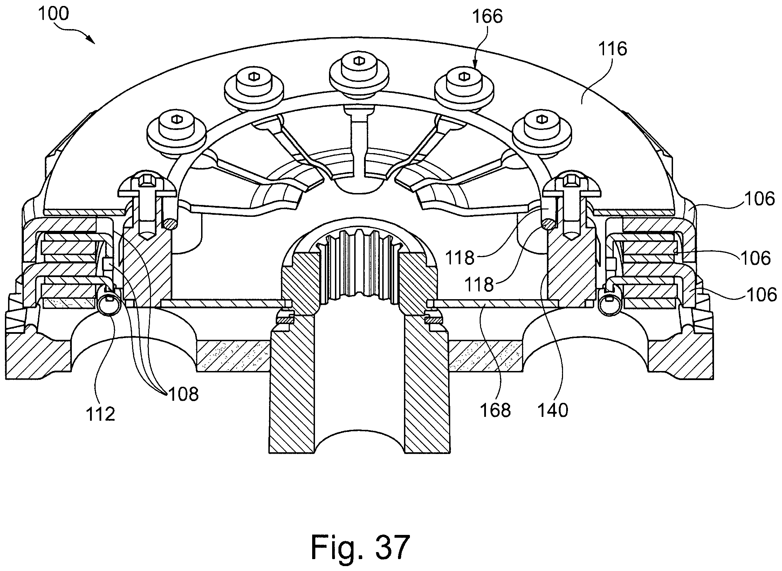

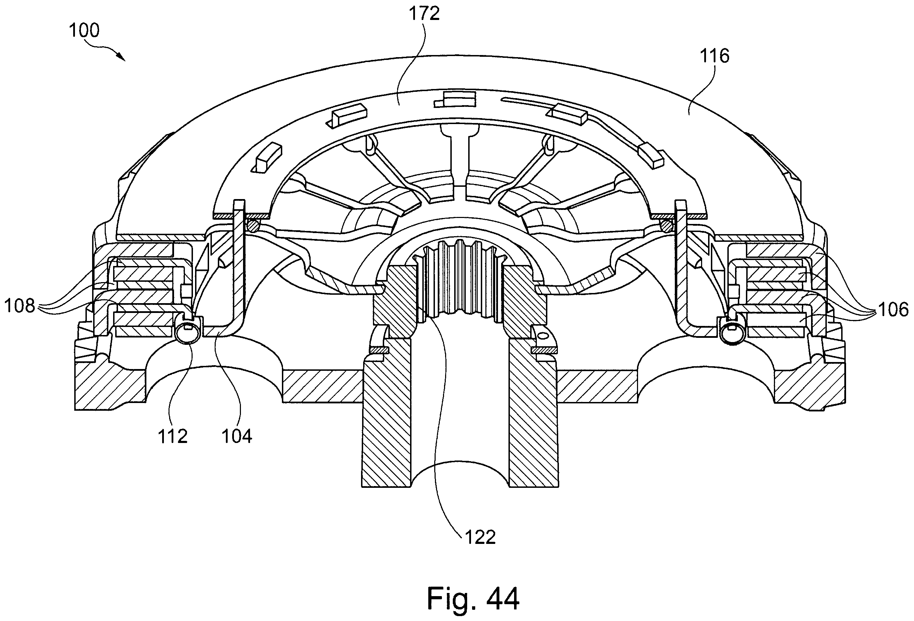

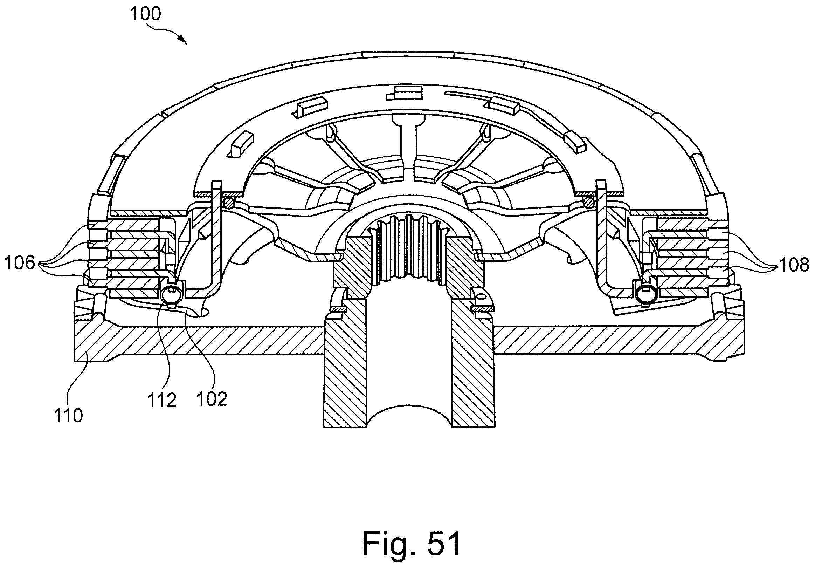

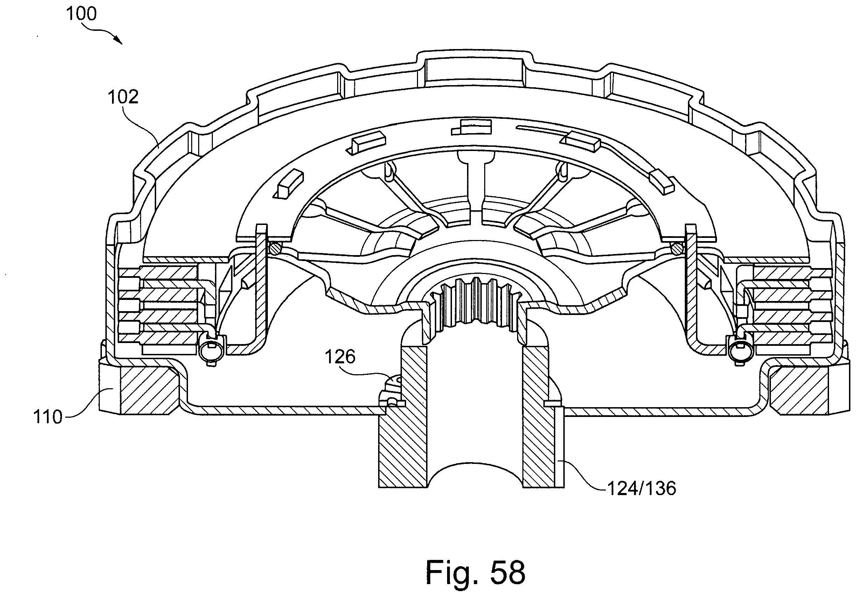

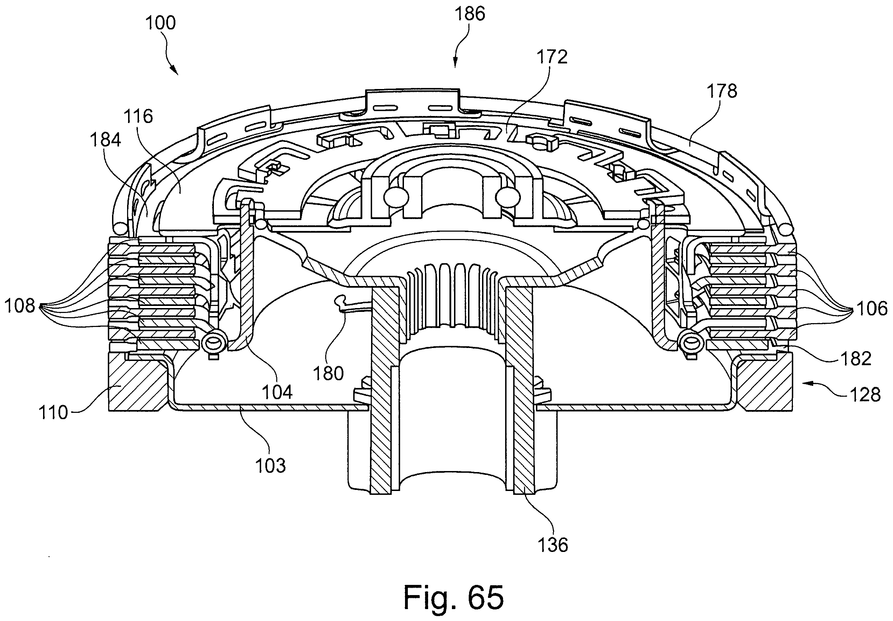

Demgemäß sind die Figuren 2 bis 72 in folgender Weise den Ausführungsformen V1 bis V12 der Nasskupplung zugeordnet:
- V1: Figuren 2 bis 9;
- V2: Figuren 10 und 11;
- V3: Figuren 12 bis 16;
- V4: Figuren 17 bis 21;
- V5: Figuren 22 bis 26;
- V6: Figuren 27 bis 31;
- V7: Figuren 32 bis 36;
- V8: Figuren 37 bis 43;
- V9: Figuren 44 bis 50;
- V10: Figuren 51 bis 57;
- V11: Figuren 58 bis 64;
- V12: Figuren 65 bis 72.

### Genaue Beschreibung von Ausführungsformen

### Ausführungsform V1

Figur 2 zeigt eine Nasskupplung 100 zum Einsatz in einem Kraftrad, insbesondere in einem Kleinkraftrad mit einem Hubkolben-Verbrennungsmotor mit einem oder mehreren Zylindern und einem Hubraum von ca. 170 - 250 cm³, insbesondere ca. 200 cm³. Die Nasskupplung 100 umfasst einen Außenkorb 102, einen Innenkorb 104, Reibscheiben 106, Lamellen 108, ein Primärzahnrad 110, Ruckdämpfer 112, eine Bodenplatte 114, eine Lamellenfeder 116, einen Stützdraht 118, einen Abschlussdraht 120, eine Abtriebsnabe 122, eine Lagerbuchse 124 und einen Sicherungsring 126. Über das Primärzahnrad 110 kann ein Drehmoment eines Antriebsmotors in die Nasskupplung 100 eingebracht werden. Ein im Primärzahnrad 110 kämmendes Ritzel sitzt üblicherweise unmittelbar auf einer Kurbelwelle des Antriebsmotors. Das Primärzahnrad 110 umfasst Aussparungen, in die Ruckdämpfer 112 eingebracht sind, die als elastische Elemente ausgeführt sind. Jeder Ruckdämpfer 112 weist eine weitere Aussparung auf, in die eine korrespondierende axiale Lasche des Außenkorbs 102 eingreift.

Eine Anzahl Reibscheiben 108 steht drehmomentschlüssig mit dem Außenkorb 102 im Eingriff, wobei die Reibscheiben 108 jedoch in axialer Richtung im Außenkorb 102 verschiebbar sind. In vertikaler Richtung liegt zwischen je zwei benachbarten Reibscheiben 106 eine Lamelle 108, wobei die Lamellen 108 derart drehmomentschlüssig mit dem Innenkorb 104 verbunden sind, dass sich die Lamellen 108 in axialer Richtung gegenüber dem Innenkorb 104 verschieben lassen.

Unterhalb der untersten Reibscheibe 106 befindet sich eine Bodenplatte 114, die sich mittels eines Abschlussdrahts 120 am Innenkorb 104 abstützt. Die Bodenplatte 114 ist drehmomentschlüssig mit dem Innenkorb 104 verbunden. Oberhalb der obersten Reibscheibe 106 liegt die Lamellenfeder 116, die ebenfalls drehmomentschlüssig mit dem Innenkorb 104 verbunden ist. Die Lamellenfeder 116 stützt sich gegen einen Stützdraht 118 ab, der entlang eines inneren Umfangs des Innenkorbs 104 angeordnet ist. Radial innerhalb des Innenkorbs 104 weist die Lamellenfeder 116 zwölf radial nach innen weisende Zungen auf. Werden die Zungen axial nach unten bewegt, so wird ein radial außerhalb des Innenkorbs 104 liegender Abschnitt der Lamellenfeder 116 angehoben; werden die Zungen angehoben, so wird der außen liegende Abschnitt abgesenkt. Durch Anheben der Zungen können die Reibscheiben 106 und die Lamellen 108 zwischen der Lamellefeder 116 und der Bodenplatte 114 axial komprimiert werden, sodass eine Reibungskraft zwischen den Reibscheiben 106 und den Lamellen 108 bzw. der Bodenplatte 114 bzw. der Lamellenfeder 116 vergrößert wird, um einen Drehmomentschluss zwischen dem Außenkorb 102 und dem Innenkorb 104 herzustellen.

Die Bodenplatte 114 ist drehmomentschlüssig mit der Abtriebsnabe 122 verbunden, die eine Innenverzahnung aufweist, um Drehmoment vom Innenkorb 104 abzugeben. Die Abgabe erfolgt üblicherweise an eine Primärwelle eines Getriebes, beispielsweise eines fliehkraftgesteuerten Automatikgetriebes oder eines schaltbaren Mehrgang-Stirnradgetriebes.

Das Primärzahnrad 110 weist im Bereich seiner Drehachse eine Ausnehmung auf, in der eine Lagerbuchse 124 aufgenommen ist. Die Lagerbuchse 124 erstreckt sich weiter durch eine koaxiale Aussparung im Bodenabschnitt des Außenkorbs 102 nach unten. Die Ausnehmung im Außenkorb 102 hat einen kleineren Durchmesser als die im Primärzahnrad 110 und die Lagerbuchse 124 weist dementsprechend eine Schulter auf, die eine axiale Position der Lagerbuchse 124 nach oben begrenzt. An einem sich durch die Aussparung im Bodenabschnitt des Innenkorbs 104 erstreckenden Abschnitt der Lagerbuchse 124 ist eine radial umlaufende Nut ausgebildet, in die der Sicherungsring 126 eingreift, um ein Herausfallen der Lagerbuchse 124 nach unten zu verhindern. In Verbindung mit der beschriebenen Schulter ist somit die axiale Position der Lagerbuchse 124 bezüglich des Außenkorbs 102 in beiden Richtungen fixiert.

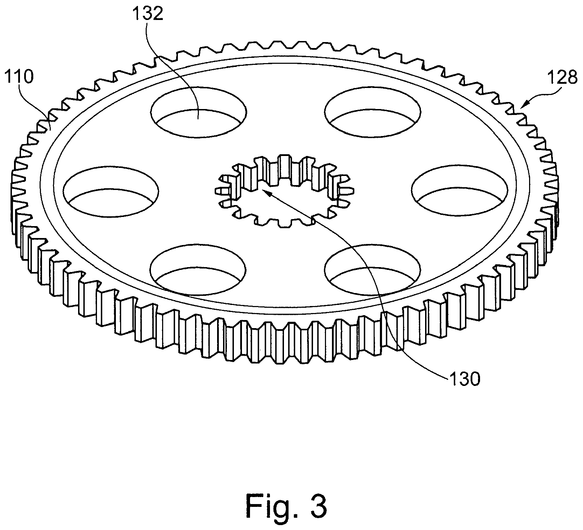

Figur 3 zeigt das Primärzahnrad 110 aus Figur 1. Das Primärzahnrad 110 ist vorzugsweise aus Stahl gefertigt und kann mittels beliebiger bekannter Fertigungsmethoden, beispielsweise urformend, umformend oder spanend herstellbar sein. Das Primärzahnrad 110 weist eine Außenverzahnung 128, eine Innenverzahnung 130 und sechs axiale Aufnahmen 132 auf, die gleichmäßig über einen Umfang um die Drehachse des Primärzahnrads 110 verteilt sind. Die Verzahnungen 128 und 130 können jeweils durch eine beliebige bekannte Fertigungsmethode hergestellt sein, beispielsweise durch Fräsen, Erodieren oder Räumen.

Die Außenverzahnung 128 ist dazu eingerichtet, mit einem Ritzel eines Antriebsmotors zu kämmen. Die Innenverzahnung 130 ist zur drehmomentschlüssigen Aufnahme der Lagerbuchse 124 eingerichtet. Alternativ kann der Drehmomentschluss auch durch eine andere Verbindungsart herbeigeführt sein, etwa durch Verstemmen, Verkeilen, Verschweißen oder Aufschrumpfen. Die Aufnahmen 132 sind dazu eingerichtet, die Ruckdämpfer 112 aufzunehmen, wobei die Aufnahmen 132 auch eine andere als die gezeigte kreisrunde Form aufweisen können.

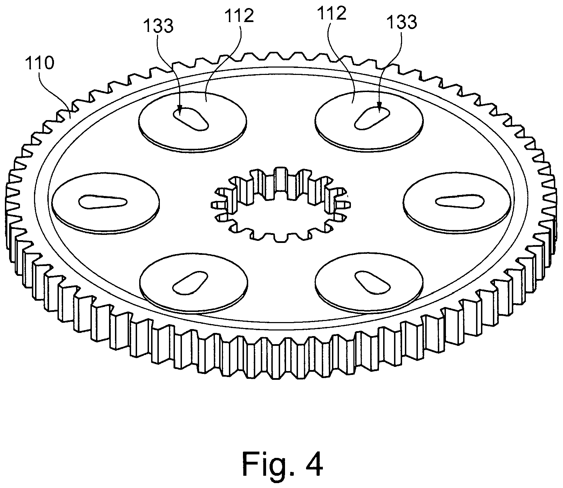

Figur 4 zeigt das Primärzahnrad 110 mit montierten Ruckdämpfern 112. Ansonsten entspricht die Darstellung der von Figur 3. Die Ruckdämpfer 112 weisen ihrerseits Aufnahmen 133 auf, welche im Wesentlichen tropfenförmig mit radial nach Innen gerichteten schmalen Enden sind.

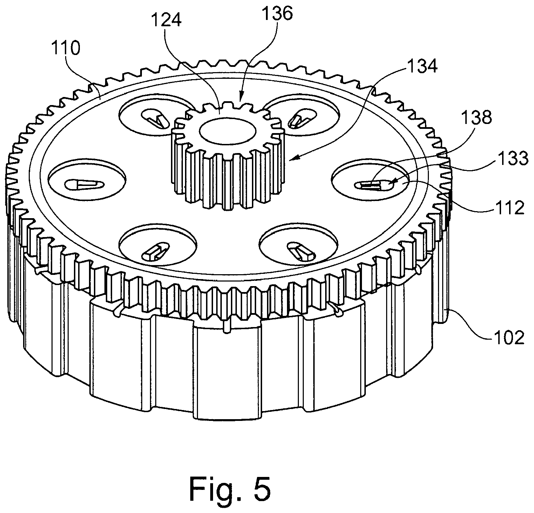

Figur 5 zeigt das Primärzahnrad 110 mit den montierten Ruckdämpfern 112 aus Figur 4, wobei zusätzlich der Außenkorb 102 und die Lagerbuchse 124 angebracht sind. Im Gegensatz zur Darstellung in Figur 2 weist die Lagerbuchse 124 nach oben statt nach unten. Außerdem trägt die Lagerbuchse 124 eine Außenverzahnung 134 die dazu vorgesehen ist, mit einem Ritzel einer Anlasseinrichtung zu kämmen. Die Anlasseinrichtung kann insbesondere eine Tretkurbel umfassen, die gegebenenfalls mittels einer Einrückeinrichtung und/oder einem Zwischengetriebe auf das Anlasserzahnrad 136 wirkt. In einer anderen Ausführungsform kann auch ein Ritzel eines elektrischen Anlassers mit der Außenverzahnung 134 der Lagerbuchse 124 kämmen. Die Lagerbuchse 124 wird zusammen mit der Außenverzahnung 134 im Folgenden als Anlasserzahnrad 136 bezeichnet.

Der Außenkorb 102 ist aus einem Blechmaterial gefertigt, beispielsweise durch Rollieren. Außerdem sind durch Biegen aus dem Blechmaterial des Außenkorbs 102 sechs Laschen 138 ausgeformt, die jeweils in den Aufnahmen 133 der Ruckdämpfer 112 aufgenommen sind. In der dargestellten Ausführungsform sind die Laschen 138 jeweils doppelt ausgeführt, sodass immer zwei Laschen 138 in einer Aufnahme 133 liegen.

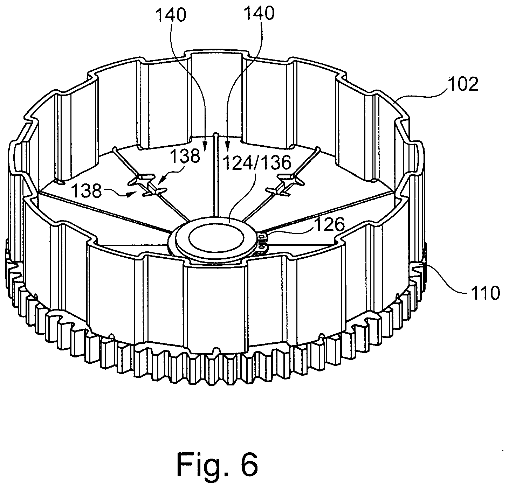

Figur 6 zeigt die Baugruppe von Figur 5 aus einer auf den Kopf gestellten Perspektive. 12 Stege 140 sind von dem Blechmaterial, das die radiale Begrenzung des Außenkorbs 102 bildet, um 90° radial nach innen gebogen. Jeder Steg 140 hat im Wesentlichen die Form eines Küchen- bzw. Pizzastücks. An jedem der Stege 140 ist eine der Laschen 138 ausgebildet, die durch Umbiegen um 90° nach unten in die Form gebracht ist, die in den Figuren 2 und 5 gezeigt ist. Die radial nach innen weisenden Spitzen der Stege 140 liegen radial an der Lagerbuchse 124 bzw. dem Anlasserzahnrad 136 an, wie in Figur 2 gezeigt ist. Der Sicherungsring 126 sichert erforderlichenfalls die Lagerbuchse 124 gegen Herausfallen nach unten.

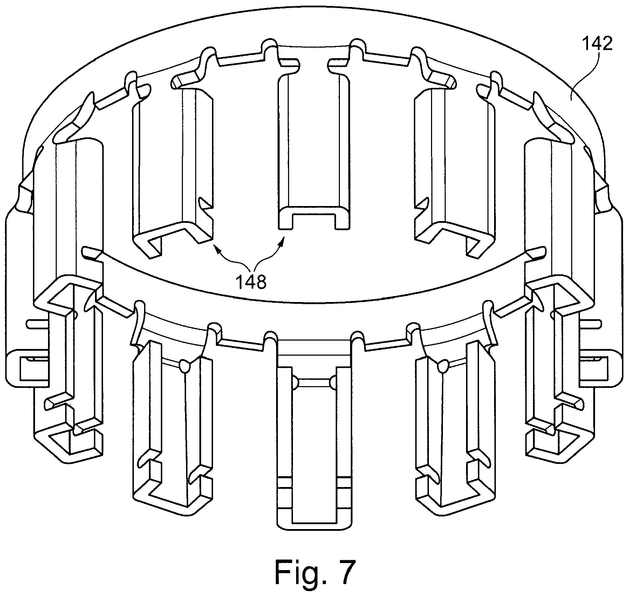

Figur 7 zeigt einen Innenträger 142, der ein wesentliches Element des Innenkorbs 104 darstellt, der in Figur 2 gezeigt ist.

Der Innenträger 142 ist ebenfalls aus einem Blech herstellbar, beispielsweise mittels Rollieren. Der Innenträger 142 dient der Mitnahme bzw. Abstützung der Lamellen 108. Außerdem ist am Innenträger 142 die Lamellenfeder 116 abgestützt, sodass der Innenträger 142 als Lagerstelle der Lamellenfeder 116 und darüber hinaus zur Abstützung der Anpresskraft und Ausrückkraft der Nasskupplung 100 dient. Des Weiteren wird die Lamellenfeder 116 über den Innenträger 142 in radialer Richtung zentriert.

Der Innenträger 142 umfasst einen ringförmigen oberen Abschnitt 144, von dem aus zwölf U-förmige Profile 148 axial nach unten weisen. Die Profile 148 sind radial nach innen geöffnet und umfassen Aussparungen für den Stützdraht 118 und den Abschlussdraht 120 aus Figur 2.

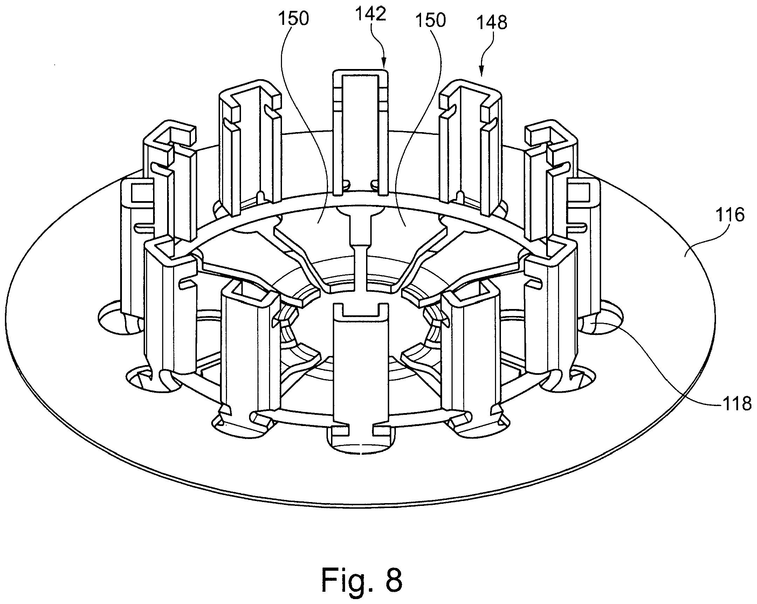

Figur 8 zeigt den Innenträger 142 aus Figur 7 zusammen mit der Lamellenfeder 116 und dem Stützdraht 118 in einer auf den Kopf gestellten Perspektive. Die Lamellenfeder 116 ist aus einem Blechteil herstellbar, beispielsweise mittels Biegen, Stanzen oder weiterer bekannter Bearbeitungsarten. Ähnlich wie der Außenkorb 102 weist auch die Lamellenfeder 116 zwölf radial nach innen weisende Stege 150 auf. Die Stege 150 erstrecken sich auf der Innenseite eines Umfangs, auf dem die Profile 148 liegen. Auf der Außenseite dieses Umfangs ist die Lamellenfeder 116 massiv ausgeformt. Die Stege 150 sind in axialer Richtung S-förmig gebogen.

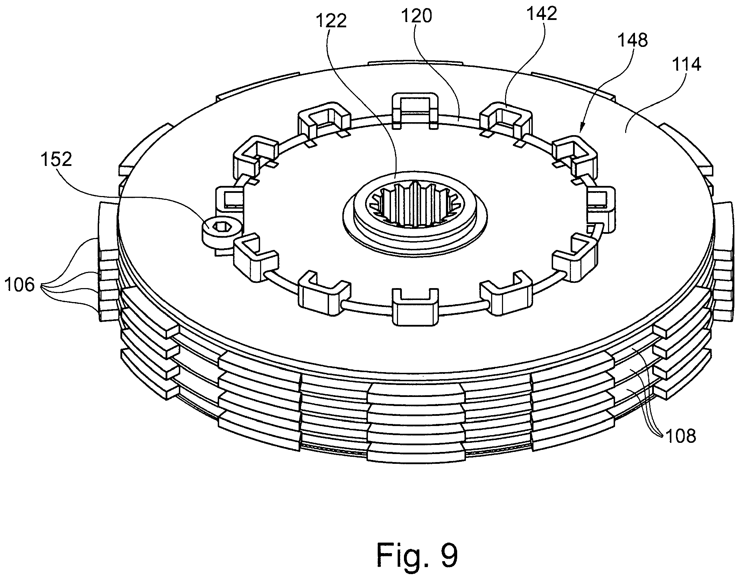

Figur 9 zeigt die in Figur 8 dargestellte Baugruppe, wobei zusätzlich die Reibscheiben 106 und die Lamellen 108 sowie der Abschlussdraht 120 montiert sind. Der Abschlussdraht 120 verläuft durch die vorgesehenen Aussparungen der U-förmigen Profile 148 des Innenträgers 142 und sichert den Stapel aus Reibscheiben 106 und Lamellen 108 gegen Herausfallen nach oben. Der Abschlussdraht 120 ist an seinen beiden Enden radial nach Außen gebogen und eine Schraube 152 sichert den Abschlussdraht 120 in diesem Bereichpunkt gegen unbeabsichtigtes Lösen. Die Schraube 152 ist in eine Ausnehmung mit Außengewinde in der Bodenplatte 114 eingedreht.

### Ausführungsform V2

Die Ausführungsform V2 basiert auf der Ausführungsform V1 und unterscheidet sich im Wesentlichen durch die Befestigung der Bodenplatte 114 am Innenträger 142. Die restlichen, oben mit Bezug auf die Ausführungsform V1 genannten Merkmale sind unverändert.

Figur 10 zeigt die Nasskupplung 100 der Ausführungsform V2 in einer Ansicht entsprechend Figur 2.

Figur 11 zeigt die Befestigung der Bodenplatte 114 am Innenträger 142. Die Aussparungen in den U-förmigen Profilen 148 des Innenträgers 142, die in der Ausführungsform V1 den Abschlussdraht 120 aufnehmen, vgl. Figur 9, sind in der Ausführungsform V2 derart verändert, dass die Bodenplatte 114 auf die Profile 148 aufgesetzt und so um die Drehachse der Nasskupplung 100 verdreht werden kann, dass eine axiale Sicherung der Bodenplatte 114 am Innenträger 142 entsteht. Die Bodenplatte 114 und insbesondere deren U-förmige Aussparungen zum Aufnehmen der Profile 148 unterscheiden sich nicht von denen der Ausführungsform V1. Je nach Ausführung der Aussparungen an den Profilen 148 des Innenträgers 142 erfolgt die Sicherung der Bodenplatte 114 am Innenträger 142 durch Drehung im oder gegen den Uhrzeigersinn.

Zur Sicherung der Bodenplatte 114 gegen Verdrehen und damit gegen ein Lösen der axialen Sicherung am Innenträger 142 sind sechs Schrauben 152 vorgesehen, die in korrespondierende Gewinde der Bodenplatte 114 eingedreht sind. Die Schrauben 152 sind so angeordnet, dass ein Kopf jeder Schraube 152 teilweise in die radiale Öffnung des zugeordneten U-förmigen Profils 148 eingreift. Es sind sechs Schrauben 152 vorgesehen, die in jedes zweite der Profile 148 eingreifen. In anderen Ausführungsformen können auch mehr oder weniger Schrauben 152 vorgesehen sein, wobei die Schrauben 152 vorzugsweise gleichmäßig über einen Umfang der Bodenplatte 114 verteilt sind.

### Ausführungsform V3

Die Ausführungsform V3 basiert auf der Ausführungsform V1 und unterscheidet sich von dieser im Wesentlichen durch die Verzahnung des Außenkorbs 102, die weitere Struktur und Herstellbarkeit des Außenkorbs 102, sowie die Ruckdämpfer 112.

Figur 12 zeigt die Nasskupplung 100 in einer Darstellung entsprechend der Figur 2. Im Unterschied dazu ist das Primärzahnrad 110 als Zahnkranz ausgeführt, wobei ein Drehmomentschluss des Zahnkranzes 110 am Außenkorb 102 durch einen Formschluss mit dem mäandernden Außenprofil des Außenkorbs 102 hergestellt ist.

Ein Bodenabschnitt des Außenkorbs 102 ist durch zehn Stege 154 gebildet, die bis zur Lagerbuchse 124 radial nach innen verlaufen. Die Ruckdämpfer 112 sind durch zwölf U-förmige Federelemente implementiert, die zwischen dem Zahnkranz 110 und dem Außenkorb 102 eine elastische Momentübertragung ermöglichen.

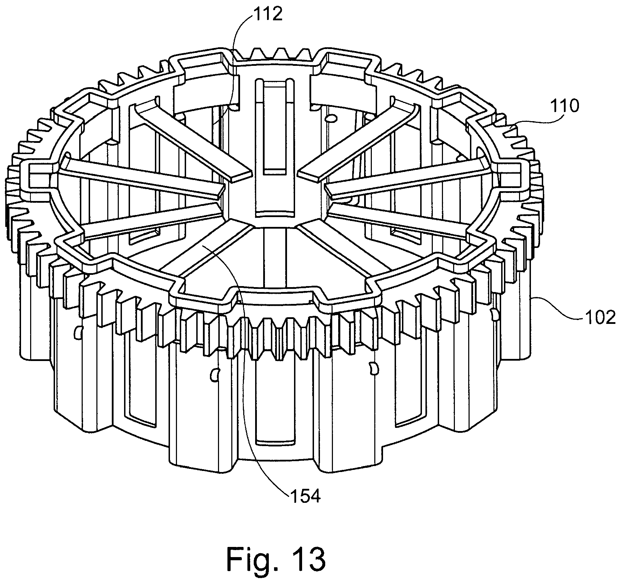

Figur 13 zeigt den Außenkorb 102 mit dem Zahnkranz 110 und den Ruckdämpfern 112. Bezüglich der Darstellung von Figur 12 ist die dargestellte Baugruppe auf den Kopf gestellt. Der Außenkorb 102 ist aus einem Blechmaterial herstellbar, beispielsweise durch Rollieren. Die zehn radialen Stege 154 entstehen durch Umbiegen entsprechender Laschen des Blechmaterials des Außenträgers 102 um 90° radial nach innen. Zwischen jeweils zwei benachbarten Stegen 154 befindet sich eine radiale Ausbuchtung zur drehmomentschlüssigen Aufnahme der Reibscheiben 106 am Außenkorb 102. Die Zahl der Ausbuchtungen und Stege 154 kann jedoch variieren, insbesondere kann sie auch zwölf betragen, wie in der Ausführungsform V1.

Die Ruckdämpfer 112 liegen in den radialen Ausbuchtungen des Außenkorbs 102 und erstrecken sich im Wesentlichen in axialer Richtung. Ein Schenkel jedes Ruckdämpfers 112 verläuft gerade nach oben und ist in einer der korrespondierenden axialen Aussparungen des Zahnkranzes 110 aufgenommen. Der andere Schenkel ist in axialer Richtung etwas kürzer und in einem Endabschnitt um 90° radial nach außen gebogen, um in eine korrespondierende radiale Aussparung des Außenkorbs 102 einzugreifen. Außerhalb des Außenkorbs 102 kann der Endabschnitt des Ruckdämpfers 112 zur Sicherung gegen Herausfallen erneut umgebogen sein, beispielsweise um 90° nach unten, wie in Figur 13 dargestellt ist.

Die Ruckdämpfer 112 erlauben eine federbelastete Verdrehung des Zahnkranzes 110 gegenüber dem Außenkorb 102. Die Verdrehung des Zahnkranzes 110 in der Darstellung von Figur 13 entgegen den Uhrzeigersinn wird dadurch begrenzt, dass ein radial nach außen gebogener Abschnitt des Blechmaterials des Außenkorbs 102 an den längeren Schenkel eines Ruckdämpfers 112 anschlägt. In der anderen Verdrehrichtung ist die Verdrehung dadurch begrenzt, dass die Schenkel des Ruckdämpfers 112 aneinander schlagen. Vorzugsweise wird die dargestellte Ausführungsform der Ruckdämpfer 112 derart verwendet, dass die Verdrehung des Zahnkranzes 110 im Uhrzeigersinn erfolgt, wenn eine übliche Kraftübertragung erfolgt, das heißt, vom Antriebsmotor zum Getriebe anstatt in der umgekehrten Richtung.

Figur 14 zeigt die Baugruppe von Figur 13 zusammen mit der Lagerbuchse 124 bzw. dem Anlasserzahnrad 136 aus einer Perspektive entsprechend der von Figur 12.

Das Anlasserzahnrad 136 bzw. die Lagerbuchse 124 ist mittels des Sicherungsrings 126 am Außenkorb 102 gegen axiales Herausfallen gesichert.

Figur 15 zeigt die Baugruppe von Figur 14 aus einer Perspektive entsprechend derer von Figur 13.

Figur 16 zeigt den Außenkorb 102 ohne zusätzliche Bauelemente aus einer Perspektive entsprechend denen der Figuren 13 und 15.

### Ausführungsform V4

Die Ausführungsform V4 basiert auf der Ausführungsform V3. Die beiden Ausführungsformen unterscheiden sich im Wesentlichen dadurch, dass der Bodenabschnitt des Außenkorbs 102 ähnlich der Ausführungsform V1 ausgeführt ist. Die sonstigen Merkmale entsprechen denen der Ausführungsform V3.

Figur 17 zeigt die Nasskupplung 100 in einer Darstellung entsprechend Figur 12. Der Bodenabschnitt des Außenträgers 102 ist durch eine Anzahl radial nach innen gebogener Stege gebildet, wie oben mit Bezug auf Figur 6 beschrieben ist. Der Zahnkranz 110 ist formschlüssig mit dem Außenkorb 102 verbunden, wie oben mit Bezug auf Figur 12 erläutert.

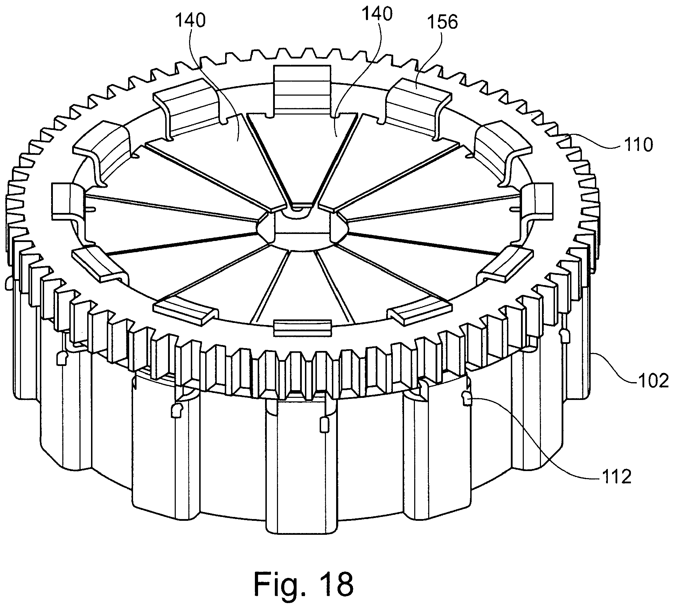

Figur 18 zeigt den Außenkorb 102 mit den Federelementen 112 und dem Zahnkranz 110 von Figur 17 aus einer Perspektive entsprechend derer von Figur 13. Es sind zwölf radial nach innen weisende Stege 140 vorgesehen, wobei auch andere Anzahlen, insbesondere zehn, möglich sind. Der Zahnkranz 110 wird durch eine Anzahl Laschen 156, die aus dem Blechmaterial des Außenkorbs 102 ausgeformt sind, in axialer Richtung nach oben gehalten. Die Laschen 156 werden um 90° nach außen umgebogen, nach dem der Zahnkranz 110 am Außenkorb 102 angebracht ist.

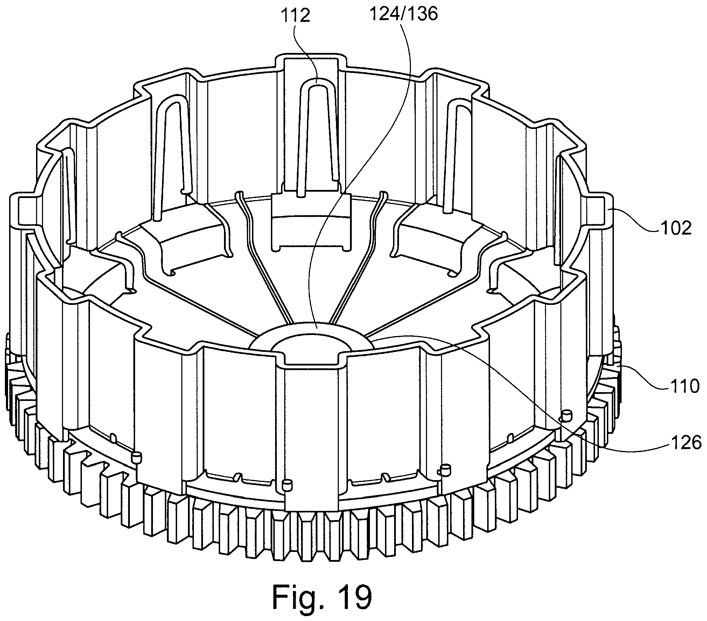

Figur 19 zeigt die Baugruppe von Figur 18 aus einer Perspektive entsprechenden derer von Figur 17. Zusätzlich ist die Lagerbuchse 124 bzw. das Anlasserzahnrad 136 angebracht und mittels des Sicherungsrings 126 in axialer Richtung gesichert.

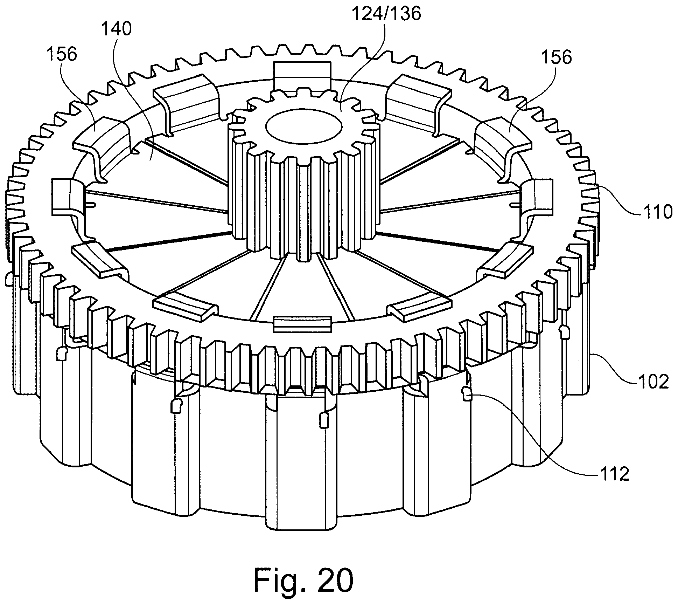

Figur 20 zeigt die Baugruppe von Figur 19 aus einer Perspektive entsprechend derer von Figur 18.

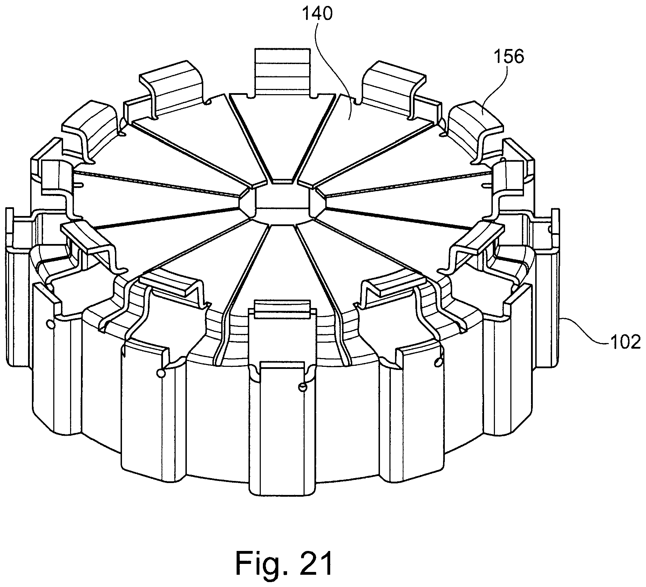

Figur 21 zeigt den Außenkorb 102 aus Figur 20 ohne weitere Bauelemente.

### Ausführungsform V5

Die Ausführungsform V5 basiert auf der Ausführungsform V3. Wesentliche Unterschiede betreffen eine Ausgestaltung der Ruckdämpfer 112 und eine Befestigung des Zahnkranzes 110 am Außenkorb 102.

Figur 22 zeigt die Nasskupplung 100 entsprechend der Darstellung von Figur 12. Der Zahnkranz 110 ist mittels einer Anzahl Nieten 158 mit dem Außenkorb 102 verbunden. Ein Bodenabschnitt des Außenkorbs 102 ist aus den Stegen 154 von Figur 13 gebildet. Die Ruckdämpfer 112 sind ebenfalls im Bodenbereich des Außenkorps 102 durch im Wesentlichen radial verlaufende Blechstreifen realisiert, die radial außen mit dem Zahnkranz 110 in Eingriff stehen.

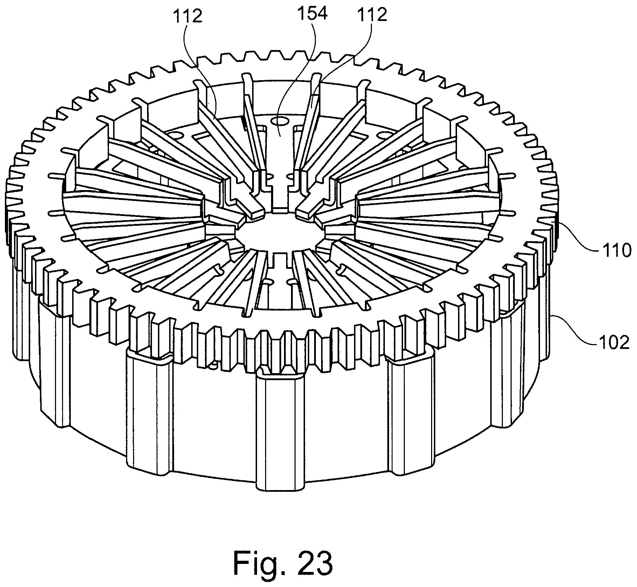

Figur 23 zeigt den Außenkorb 102 mit dem Zahnkranz 110 aus einer Perspektive entsprechend derer von Figur 13.

Jeder Steg 154 besteht aus einem Blechstreifen, der durch Biegen um 90° radial nach innen aus dem Blechmaterial des Außenkorbs 102 hergestellt ist. Von einem radial inneren Abschnitt jedes Stegs 154 verlaufen zwei Blechstreifen radial nach außen, die im Wesentlichen senkrecht auf dem Blechstreifen des Stegs 154 stehen. Diese weiteren Blechstreifen bilden den Ruckdämpfer 112. Die Blechstreifen des Ruckdämpfers 112 greifen an radial äußeren Enden in korrespondierende Nuten ein, die in axialer Richtung an einem Innenumfang des Zahnkranzes 110 ausgebildet sind. Dadurch ist der Zahnkranz 110 bezüglich des Außenkorbs 102 in einem Maße drehbar, wie es die Biegung der Ruckdämpfer 112 erlaubt.

Zur Herstellung des Außenkorbs 102 werden die Blechstreifen des Ruckdämpfers 112 bezüglich der Blechstreifen der Stege 154 ausgeformt, bevor die Stege 154 radial nach innen gebogen werden.

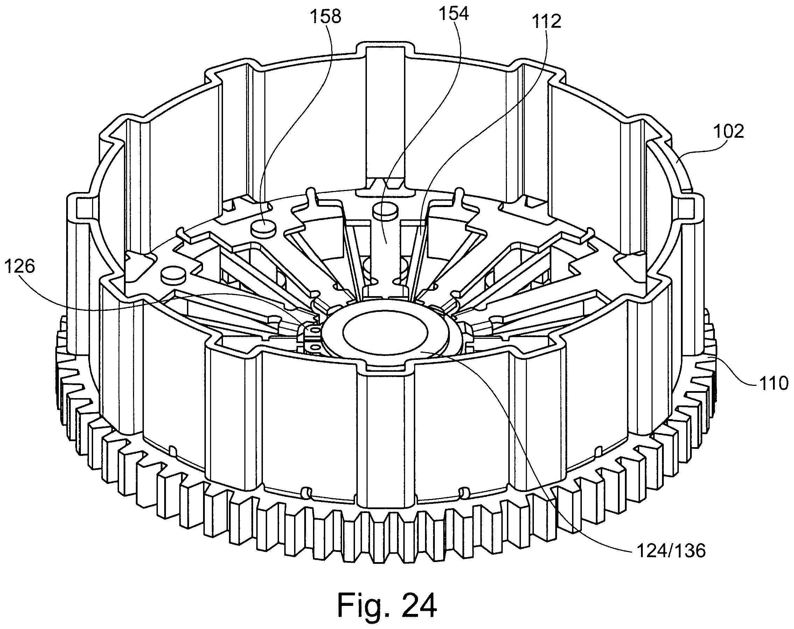

Figur 24 zeigt die Baugruppe von Figur 23 zusammen mit einer Anzahl Nieten 158, der Lagerbuchse 124 bzw. dem Anlasserzahnrad 136 und dem Sicherungsring 126 aus einer Perspektive entsprechend derer von Figur 22.

Mittels der Nieten 158 ist der Zahnkranz 110 in axialer Richtung nach unten am Außenkorb 110 in axialer Richtung nach unten am Außenkorb 102 befestigt.

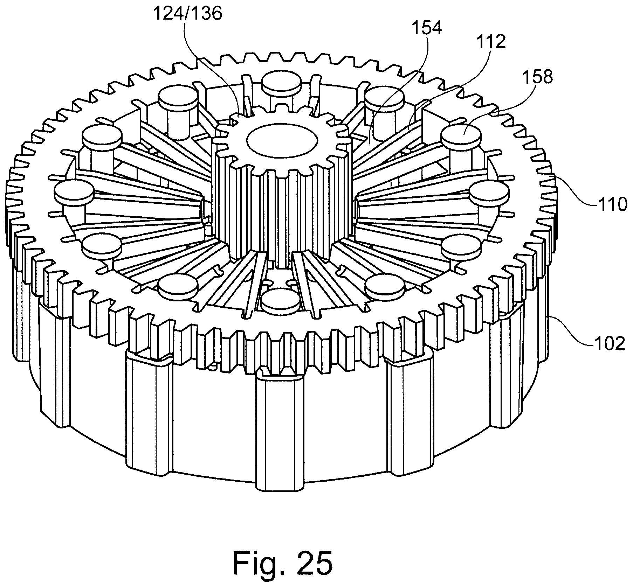

Figur 25 zeigt die Baugruppe von Figur 24 in einer Perspektive entsprechend derer von Figur 23. Die Nieten 158 zentrieren den Zahnkranz 110 bezüglich des Außenkorbs 102. Außerdem begrenzen die Nieten 158 einen Verdrehwinkel zwischen dem Zahnkranz 110 und dem Außenkorb 102.

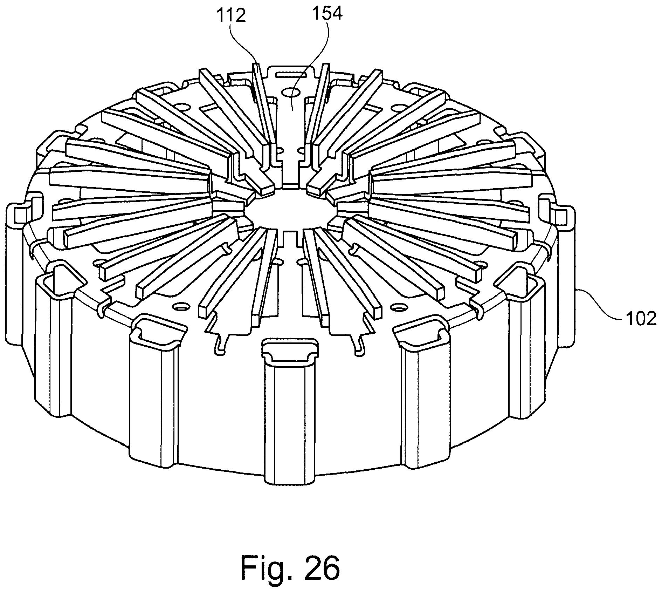

Figur 26 zeigt den Außenkorb 102 ohne weitere Elemente in einer Perspektive entsprechend derer von Figur 25.

### Ausführungsform V6

Die Ausführungsform V6 basiert auf der Ausführungsform V3, jedoch ist das Primärzahnrad 110 ähnlich wie in der Variante V1 ausgeführt.

Figur 27 zeigt die Nasskupplung 100 in einer Darstellung entsprechend derer von Figur 12. Anstelle eines Zahnkranzes 110 ist ein Primärzahnrad 110 entsprechend Figur 2 vorgesehen. In einem Außenbereich weist das Primärzahnrad 110 eine Schulter 160 auf, in die axiale Zentrierstege 162 eingreifen, die in einem radialen Außenbereich des Außenkorbs 102 ausgebildet sind:

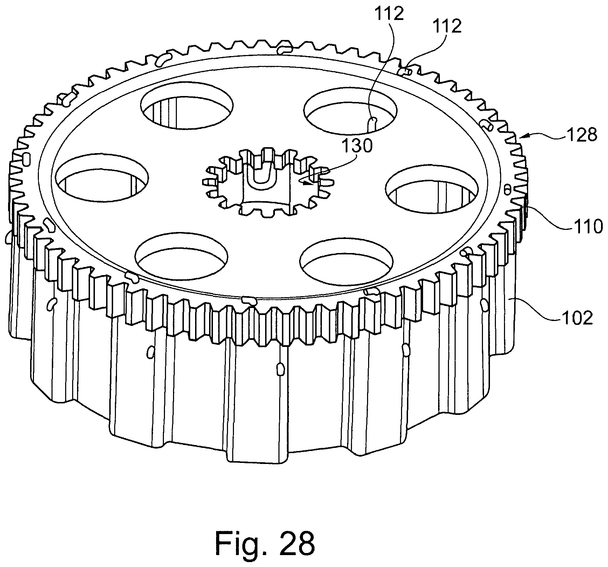

Figur 28 zeigt den Außenkorb 102 mit dem Primärzahnrad 110 und den Ruckdämpfern 112 in einer Perspektive entsprechend derer von Figur 13. Das Primärzahnrad 110 ist im Wesentlichen so ausgebildet, wie das in Figur 3 dargestellte Primärzahnrad 110 der Ausführungsform V1. Zusätzlich sind in einem Außenbereich axiale Bohrungen eingebracht, um Endabschnitte der U-förmigen Ruckdämpfer 112 aufzunehmen. Nach dem Durchführen der Endabschnitte durch die Bohrungen wird der Federdraht um 90° in Umfangsrichtung umgebogen, um ein Herausfallen zu verhindern.

In einer Ausführungsform kann das Primärzahnrad 110 durch Umformen hergestellt werden. Dazu kann ein Blech verwendet werden, das abschnittweise aufgedickt wird. Die Außenverzahnung 128 und die Innenverzahnung 130 können in bekannter Weise beispielsweise durch Fräsen oder Räumen hergestellt werden.

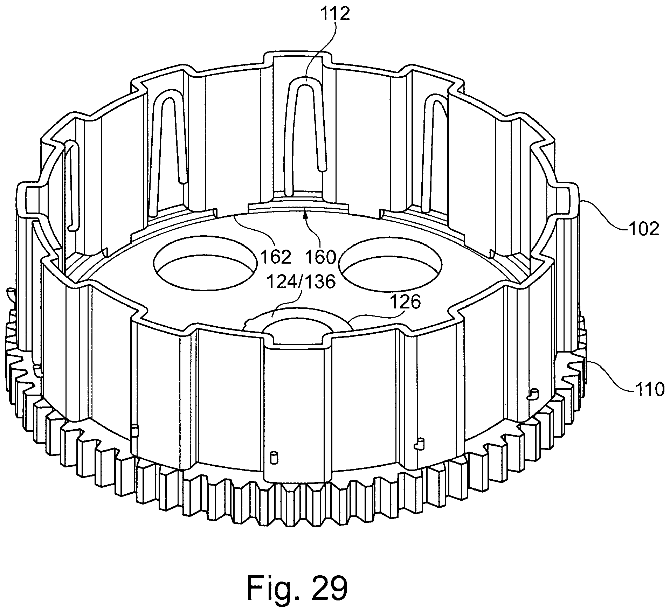

Figur 29 zeigt die Baugruppe von Figur 28 in einer Perspektive entsprechend derer von Figur 27, wobei zusätzlich die Lagerbuchse 124 bzw. das Anlasserzahnrad 136 angebracht und mittels des Sicherungsringsrings 126 in vertikaler Richtung am Primärzahnrad 110 gesichert ist.

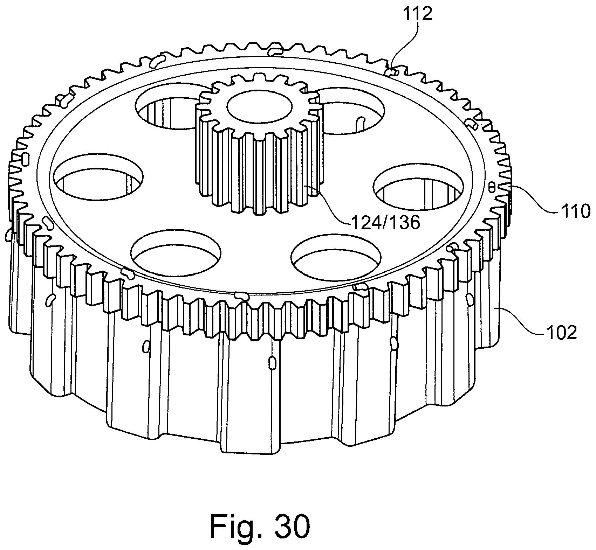

Figur 30 zeigt die Baugruppe von Figur 29 in einer Perspektive entsprechend derer von Figur 28.

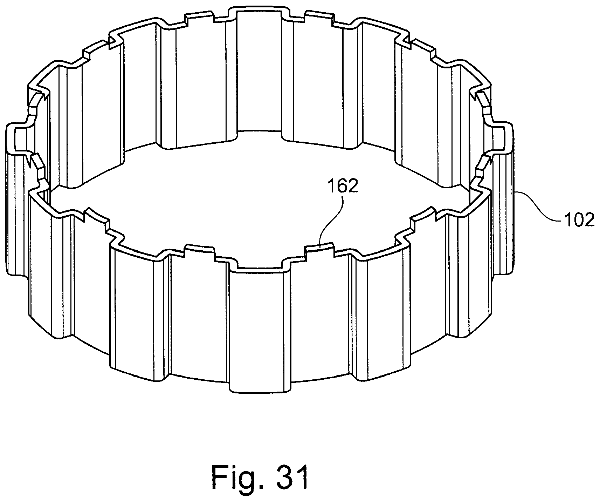

Figur 31 zeigt den Außenkorb 102 ohne weitere Bauelemente.

### Ausführungsform V7

Die Ausführungsform V7 basiert auf der Ausführungsform V3. Der Bodenabschnitt des Außenkorbs 102 ist jedoch durch eine Anzahl Speichen 164 gebildet, die aus separaten Blechstreifen herstellbar sind.

Figur 32 zeigt die Nasskupplung 100 in einer Darstellung entsprechend derer von Figur 12. Die Blechstreifen der Speichen 164 liegen in axialen Nuten im Innenumfang des Zahnkranzes 110 und weiteren Nuten im Bereich des Außenumfangs der Lagerbuchse 124 bzw. des Anlasserzahnrads 136.

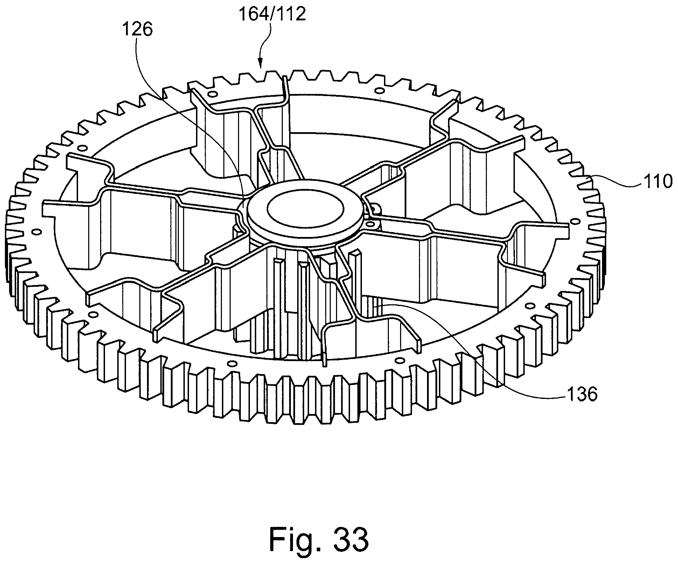

Figur 33 zeigt das Primärzahnrad 110 mit den Speichen 164, dem Anlasserzahnrad 136 und dem Sicherungsring 126. Die Speichen 164 sind jeweils durch Abschnitte zweier Blechstreifen gebildet, wobei einander entgegen gesetzte Endabschnitte der Blechstreifen jeweils benachbarten Speichen 164 zugeordnet ist. In einem radialen Mittenabschnitt der Speichen 164 liegen die Blechstreifen aneinander an und können miteinander verbunden sein, beispielsweise durch Nieten oder Schweißen. Nuten im Anlasserzahnrad 136, welche jeweils einen Mittenabschnitt jedes Blechstreifens aufnehmen, liegen vorzugsweise auf einem Umfang um die Drehachse des Anlasserzahnrads 136 und hinterschneiden jeweils zwei benachbarte Zähne des Anlasserzahnrads 136.

Durch die Blechstreifen der Speichen 164 ist das Anlasserzahnrad 136 bezüglich des Zahnkranzes 110 um ein bestimmtes Maß verdrehbar. Im diesem Sinne dienen die Blechstreifen der Speichen 164 als Ruckdämpfer 112. Eine Begrenzung des Verdrehwegs zwischen dem Anlasserzahnrad 136 und dem Zahnkranz 110 erfolgt durch Laschen des Außenkorbs 102, wie mit Bezug auf die folgenden beiden Figuren genauer erklärt wird.

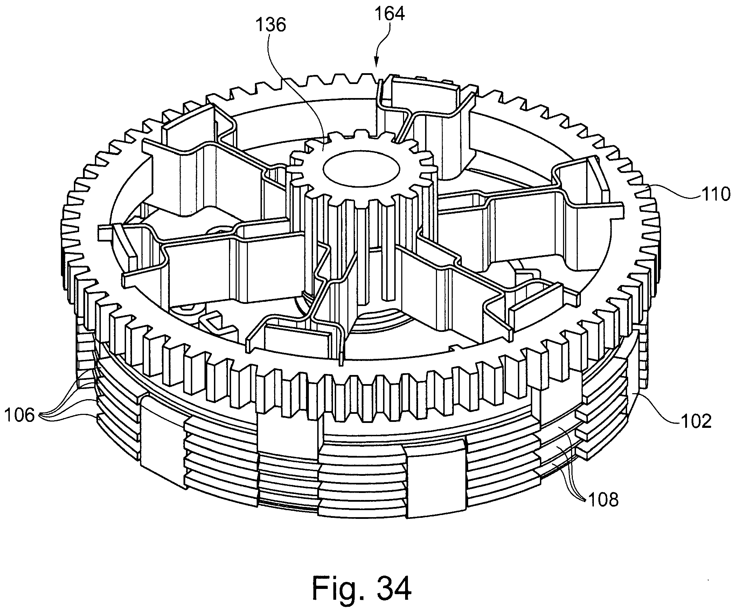

Figur 34 zeigt das Primärzahnrad 110, das Anlasserzahnrad 136, die Speichen 164 und den Außenkorb 102 zusammen mit den Reibscheiben 106 und den Lamellen 108. In einer Perspektive entsprechend derer von Figur 13.

Der Außenkorb 102 umfasst sich nach unten erstreckende Laschen, in die die Reibscheiben 106 drehmomentschlüssig eingreifen. Ferner umfasst der Außenkorb 102 sich nach oben erstreckende Laschen, die jeweils zwischen zwei Blechstreifen liegen, die zusammen eine Speiche 164 bilden. Die Laschen des Außenkorbs 102 sind schmaler als der Abstand der Blechstreifen der Speichen 164, sodass über die Breitendifferenz ein Verdrehweg des Zahnkranzes 110 bezüglich des Anlasserzahnrads 136 begrenzt ist.

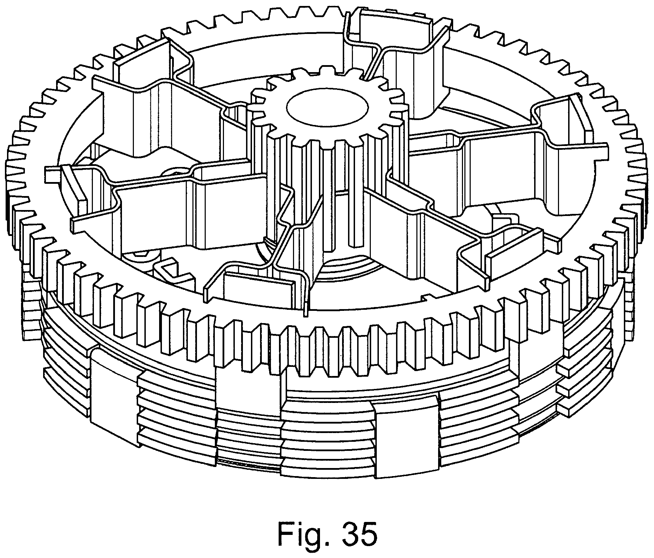

Figur 35 zeigt die Baugruppe von Figur 34 in einer ähnlichen Darstellung.

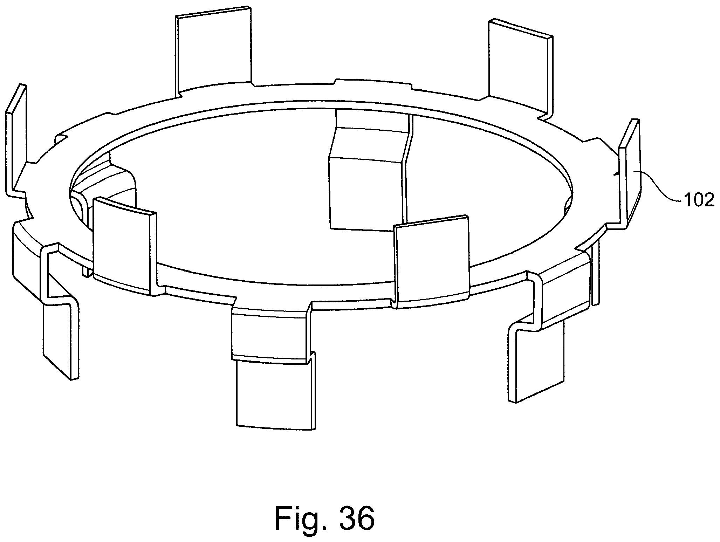

Figur 36 zeigt den Außenkorb 102 ohne weitere Bauelemente.

### Ausführungsform V8

Die Ausführungsform V8 basiert auf der Ausführungsform V1. Im Unterschied dazu weisen die Reibscheiben 106 in axialer Richtung umgebogene Stege zur Momentübertragung untereinander auf. Die Lamellenfeder 116 ist mittels eines zweiten Stützdrahts 118 am Innenkorb 114 gesichert. Die Sicherung des zusätzlichen Stützdrahts 118 erfolgt durch Schraubbolzen 166. Die Ruckdämpfer 112 sind durch Schraubenfedern realisiert. Der Innenkorb umfasst eine Grundplatte und einen Innenträger.

Figur 37 zeigt die Nasskupplung 100 in einer Darstellung entsprechend derer von Figur 2. Zusätzlich zum unteren Stützdraht 118 ist ein oberer Stützdraht 118 vorgesehen, der dem unteren Stützdraht 118 bezüglich der Lamellenfeder 116 gegenüberliegt. Die Schraubbolzen 166 umfassen jeweils einen Stehbolzen 170 mit Innengewinde, der an der Bodenplatte 168 des Innenkorbs 104 beispielsweise durch Nieten verbunden ist, und eine Schraube, die axial von oben in das Innengewinde des Stehbolzens 170 eingedreht ist. Die Schraubbolzen 166 sind auf einem Umfang um die Drehachse der Nasskupplung 100 gleichmäßig verteilt.

Die Ruckdämpfer 112 liegen jeweils in einer Aussparung einer Grundplatte 168 des Innenkorbs 104. Die Aussparungen liegen auf einem Umfang um die Drehachse der Nasskupplung 100 und die Ruckdämpfer 112 liegen in unbelastetem Zustand an beiden Enden an Begrenzungen der Aussparungen an. Außerdem liegen die Enden der Ruckdämpfer 112 an in axialer Richtung nach unten weisenden Stegen der Lamellen 108 an. Die Aussparungen in der Grundplatte 168 sind so geformt, dass die Stege der Lamellen 168 in Umfangsrichtung verschoben werden können. Dadurch sind die Lamellen 108 bezüglich der Grundplatte 168 des Innenkorbs 104 um einen gewissen Betrag drehbar, wobei die Ruckdämpfer 112 komprimiert werden. Die Stege benachbarter Lamellen 108 greifen ineinander ein, sodass die Lamellen 108 untereinander drehmomentschlüssig verbunden sind. Eine ähnliche Verbindung besteht zwischen jeweils benachbarten Reibscheiben 106, wobei die korrespondierenden Stege jedoch auf der radialen Außenseite der Reibscheiben 106 liegen.

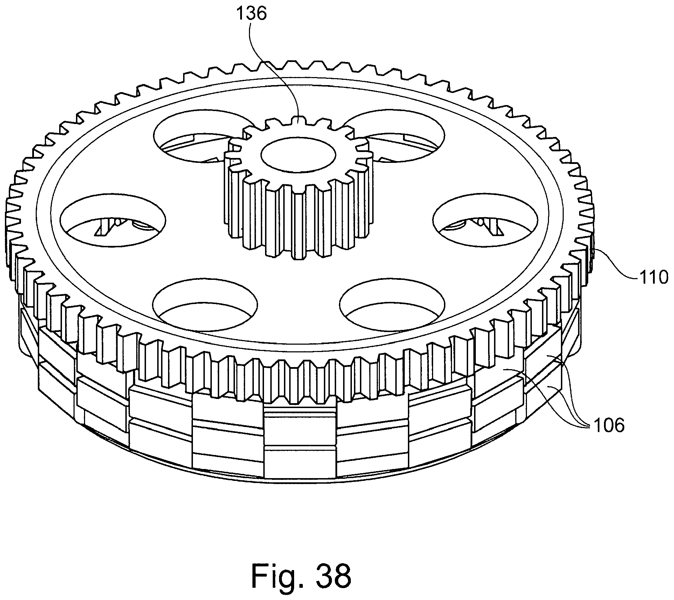

Figur 38 zeigt das Primärzahnrad 110 mit dem Anlasserzahnrad 136 und den Reibscheiben 106. Die Baugruppe ist bezüglich der Darstellung von Figur 37 auf den Kopf gestellt.

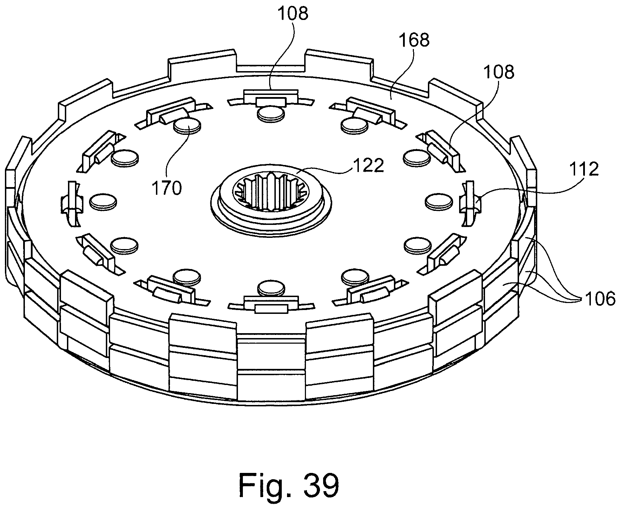

Figur 39 zeigt die Grundplatte 168 und den Innenträger 142 des Innenkorbs 104 zusammen mit den Reibscheiben 106 und der Abtriebsnabe 122. Die dargestellte Baugruppe ist bezüglich der Darstellung von Figur 37 auf den Kopf gestellt. Zu erkennen sind die Nieten der Stehbolzen 170 zur Verbindung an der Grundplatte 168 und Laschen des Innenträgers 142, die durch die Grundplatte 168 ragen und jeweils einen Ruckdämpfer 112 umschließen. Die Größe der Ausschnitte in der Grundplatte 168 zur Aufnahme der axialen Laschen des Innenträgers 142 begrenzt den Verdrehweg des Innenträgers 142 bezüglich der Grundplatte 168.

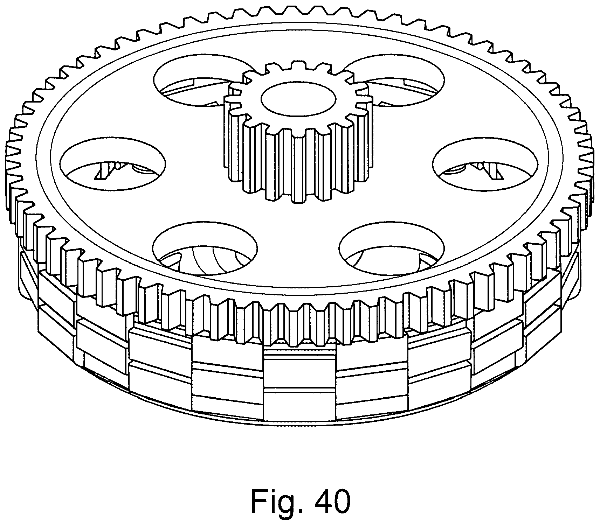

Figur 40 zeigt eine Darstellung des Primärzahnrads 110 ähnlich derer von Figur 38.

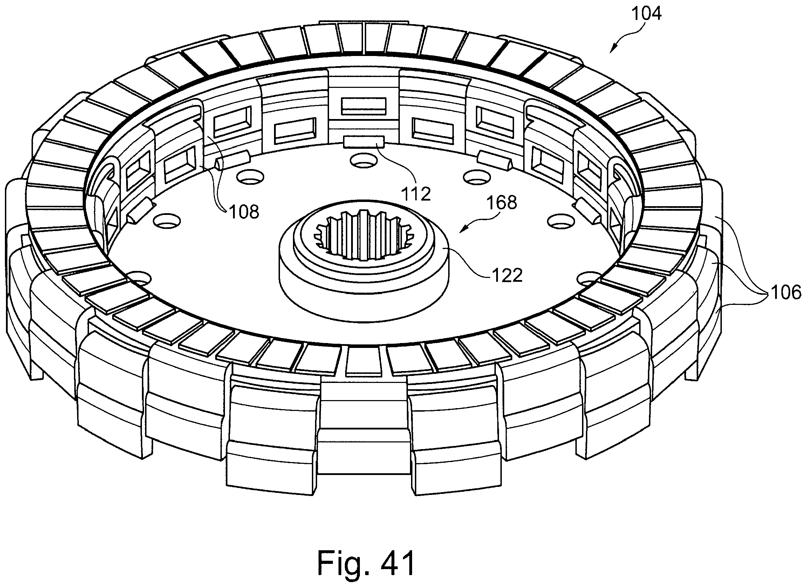

Figur 41 zeigt den Innenkorb 104 mit der Grundplatte 168, den Reibscheiben 106, den Lamellen 108 und der Abtriebsnabe 122. Es ist zu sehen, dass der Innenkorb 104 durch die in axialer Richtung umgebogenen und ineinander eingreifenden Laschen der Lamellen 108 gebildet ist.

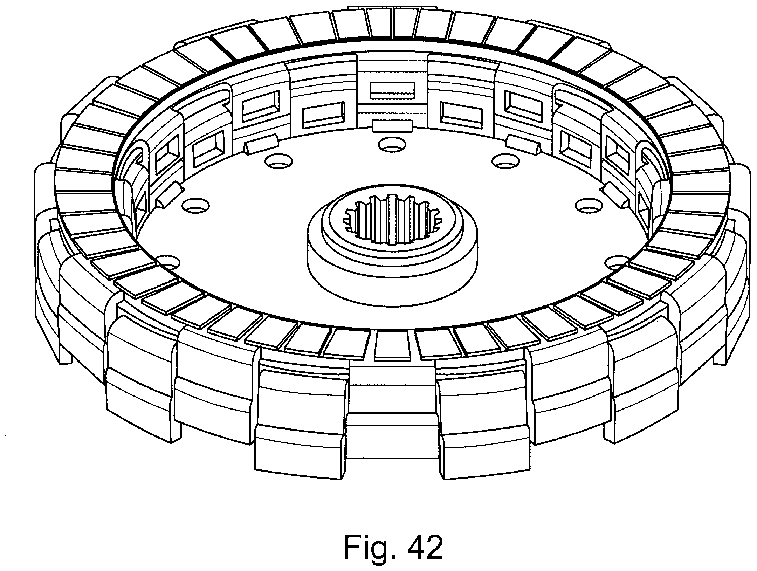

Figur 42 zeigt eine Darstellung ähnlich der von Figur 41.

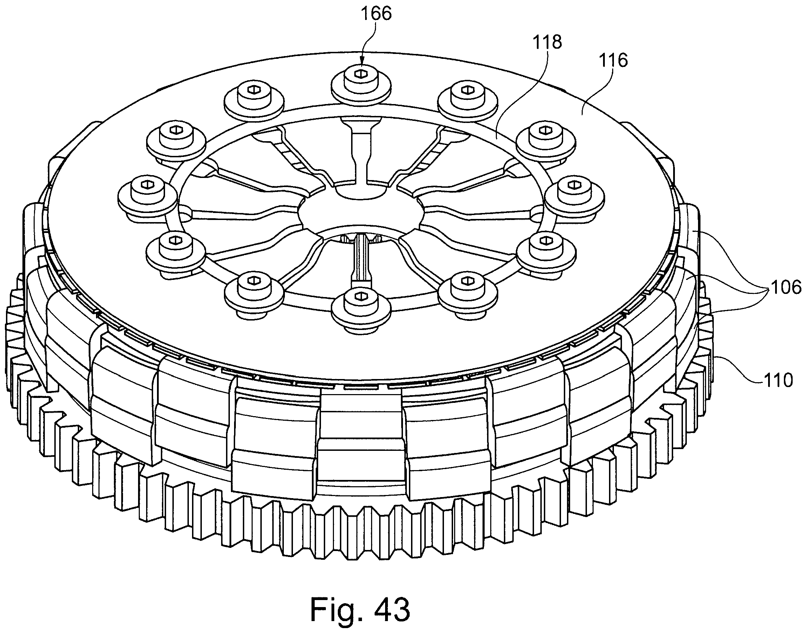

Figur 43 zeigt das Primärzahnrad 110 mit den Reibscheiben 106 und den Lamellen 108 sowie der Lamellenfeder 116 im montierten Zustand.

### Ausführungsform V9

Die Ausführungsform V9 basiert auf der Ausführungsform V8. Sie unterscheidet sich im Wesentlichen dadurch, dass der Innenkorb 104 tiefgezogen ist und eine andere Befestigung der Lamellenfeder 116 am Innenkorb 104 vorgesehen ist.

Figur 44 zeigt die Nasskupplung 100 in einer Darstellung entsprechend derer von Figur 37. Der Innenkorb 104 ist durch ein Tiefziehteil gebildet, der die Grundplatte 168 und die Schraubbolzen 166 in der Ausführungsform V8 ersetzt (vgl. Figur 37). Der Innenkorb 104 umfasst einen radialen Abschnitt, der Aussparungen aufweist, in denen die Ruckdämpfer 112 liegen. Wie in der Ausführungsform V8 liegen Enden der Ruckdämpfer 112 zusätzlich an nach unten weisenden Laschen der Lamellen 108 an, sodass eine Verdrehbarkeit des Innenkorbs 104 bezüglich der miteinander verschränkten Lamellen 108 unter Kompression der Ruckdämpfer 112 gegeben ist.

Der Innenkorb 104 umfasst ferner einen axialen Abschnitt, der im Bereich der Lamellenfeder 116 in zwölf fingerartig sich nach oben erstreckenden Laschen ausläuft, die durch entsprechende Ausnehmung in der Lamellenfeder 116 durchgeführt sind.

Zur axialen Sicherung der Lamellenfeder 116 am Innenkorb 104 ist eine Abstützscheibe 172 vorgesehen, die korrespondierende Aussparungen für die Laschen des Innenkorbs 104 aufweist. Die Laschen des Innenkorbs 104 weisen jeweils eine seitliche Nut auf, in die die Abstützscheibe 172 durch Verdrehen um die Drehachse der Nasskupplung 100 eingreift. Dadurch ist die Lamellenfeder 116 axial am Innenkorb 104 befestigt.

Eine Sicherung der Abstützscheibe 172 gegen Verdrehen ist durch zwei einander gegenüberliegende radiale Federeinrichtungen der Abstützscheibe 172 jeweils im Bereich einer der Laschen des Innenkorbs 104 realisiert. Vom unteren Ende der axialen Laschen erstreckt sich der Innenträger 104 weiter topfförmig radial nach innen und grenzt an die Antriebsnabe 122. die Antriebsnabe 122 und der Innenkorb 104 tragen ineinander eingreifende Verzahnungen zur Übertragung des Drehmoments. Der Innenkorb 104 dient auch zur Abstützung der axialen Anpresskraft auf dem Stapel von Reibscheiben 106 und Lamellen 108, wobei die Anpresskraft durch die Lamellenfeder 116 ausgeübt wird.

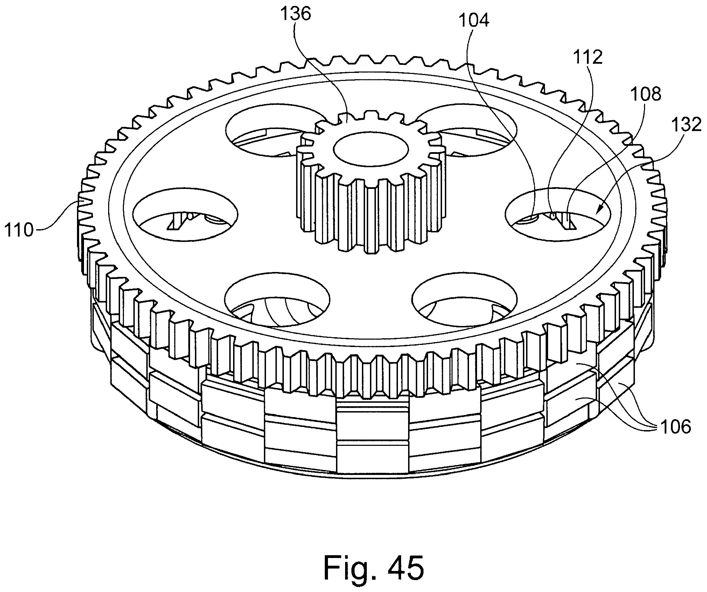

Figur 45 zeigt das Primärzahnrad 110 mit dem Anlasserzahnrad 136 und dem Innenkorb 104, an dem die Reibscheiben 106 und die Lamellen 108 angebracht sind. Dabei entspricht die Perspektive der von Figur 38.

Durch eine der Aufnahmen 132 im Primärzahnrad 110 ist der radiale Abschnitt des Innenkorbs 104 zu erkennen, der eine Ausnehmung aufweist, in der der Ruckdämpfer 112 liegt und aus der eine Lasche einer der Lamellen ragt.

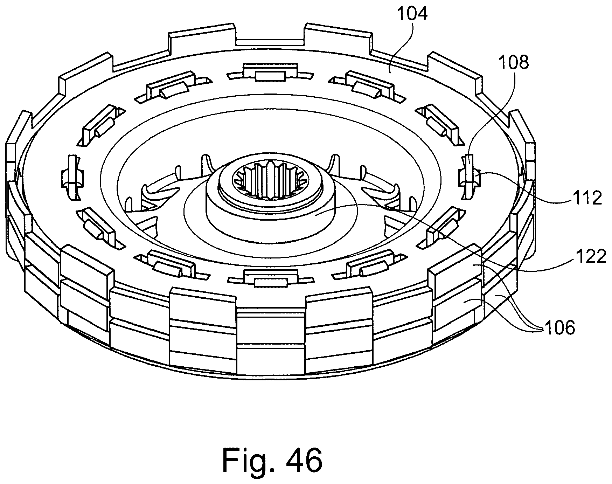

Figur 46 zeigt den Innenkorb 104 mit der Abtriebsnabe 122 zusammen mit den Reibscheiben 106 und den Lamellen 108. Die Darstellung entspricht der von Figur 45, wobei das Primärzahnrad 110 entfernt ist.

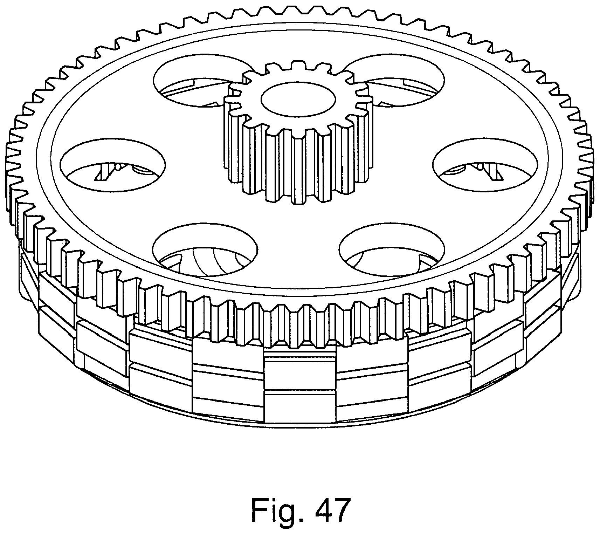

Figur 47 zeigt eine Darstellung ähnlich der von Figur 45.

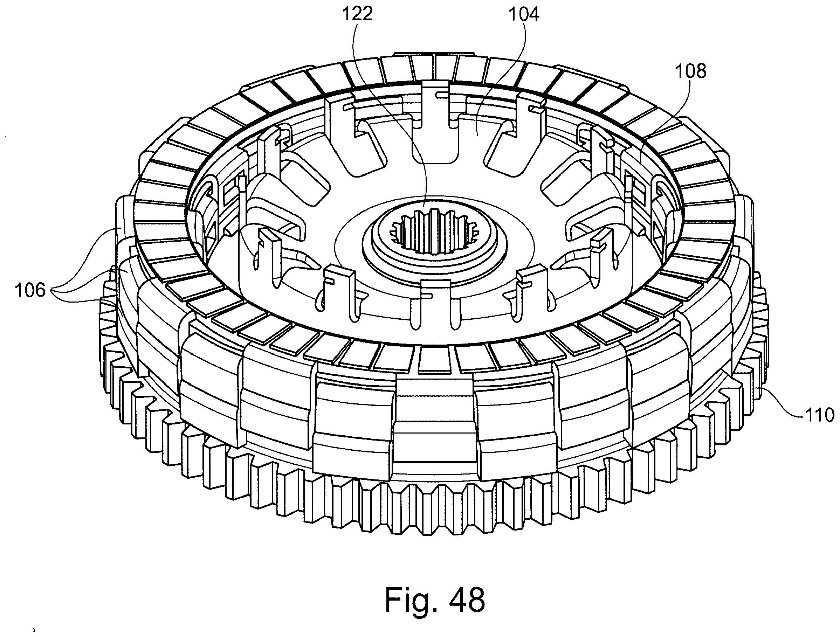

Figur 48 zeigt die Baugruppe von Figur 45 aus einer anderen Perspektive. Die Perspektive entspricht der von Figur 41 und ist bezüglich der von Figur 47 auf den Kopf gestellt.

Gut zu erkennen sind die zwölf nach oben ragenden, fingerförmigen Laschen zur Aufnahme der Lamellenfeder 116 und der Abstützscheibe 172. Die in Umfangsrichtung weisenden Nuten sind jeweils auf der im Uhrzeigersinn liegenden Seite in die Laschen des Innenkorbs 104 eingebracht. Dementsprechend erfolgt eine Sicherung durch die Abstützscheibe, indem diese gegenüber dem Innenträger 104 entgegen dem Uhrzeigersinn verdreht wird.

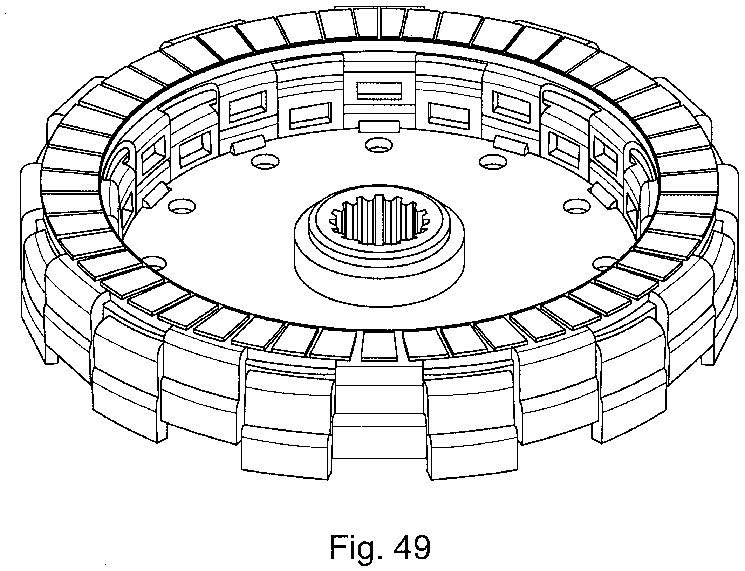

Figur 49 zeigt eine weitere Darstellung des Innenträgers 104 mit weiteren Elementen der Nasskupplung 100.

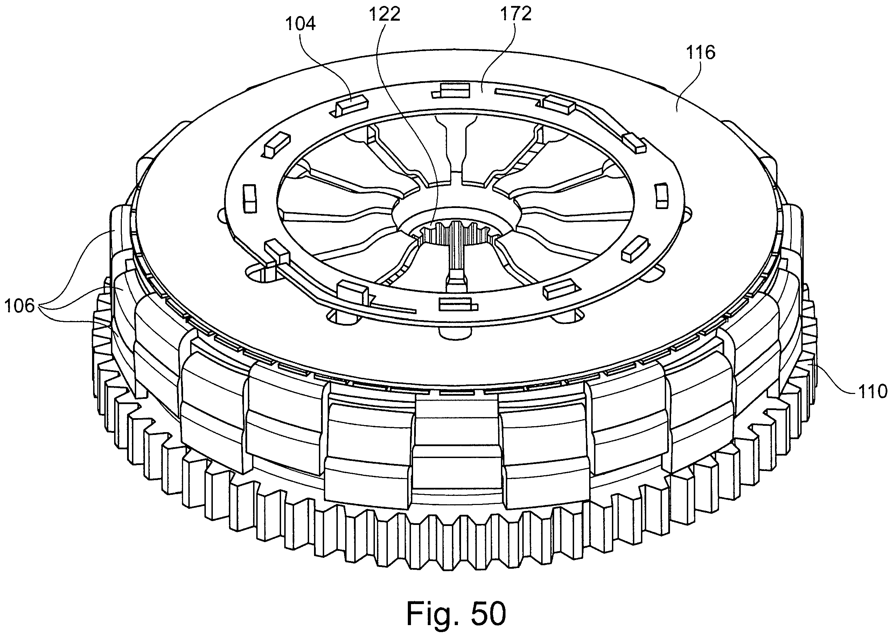

Figur 50 zeigt die Baugruppe von Figur 48 mit zusätzlich angebrachter Lamellenfeder 116 und Abstützscheibe 172.

### Ausführungsform V10

Die Ausführungsform V10 basiert auf der Ausführungsform V9. Im Unterschied dazu ist der Außenkorb 102 durch Biegeteile realisiert.

Figur 51 zeigt die Nasskupplung 100 in einer Darstellung entsprechend derer von Figur 44. Der Außenkorb 102 ist durch zwölf Biegeelemente realisiert, die sich in axialer Richtung zwischen den radial nach außen verlaufenden Stegen der Reibscheiben 106 erstrecken. Ferner umfassen die Biegeelemente des Außenkorbs 102 einen im Wesentlichen radial verlaufenden Fortsatz am unteren Ende des axialen Abschnitts, wobei an einem radial inneren Ende des radialen Abschnitts ein Eingriffselement in eine korrespondierende Aussparung des Primärzahnrads 110 eingreift.

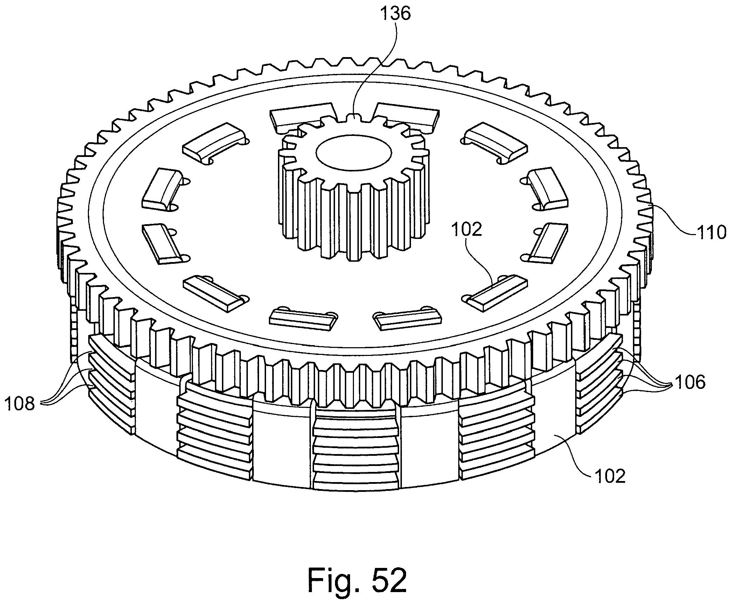

Figur 52 zeigt das Primärzahnrad 110 mit dem Anlasserzahnrad 136, dem Außenkorb 102 sowie den Reibscheiben 106 und den Lamellen 108 aus einer Perspektive entsprechend derer von Figur 45. Die Biegelemente des Außenkorbs 102 sind zwölf voneinander unabhängige Elemente, die einzeln am Primärzahnrad 110 montiert sind. Nach dem Durchführen des Endabschnitts jedes Biegeelements durch eine der Aussparungen im Primärzahnrad 110 ist der entsprechende Endabschnitt radial um 90° nach außen umgebogen, um das Biegeelement am Primärzahnrad 110 zu sichern.

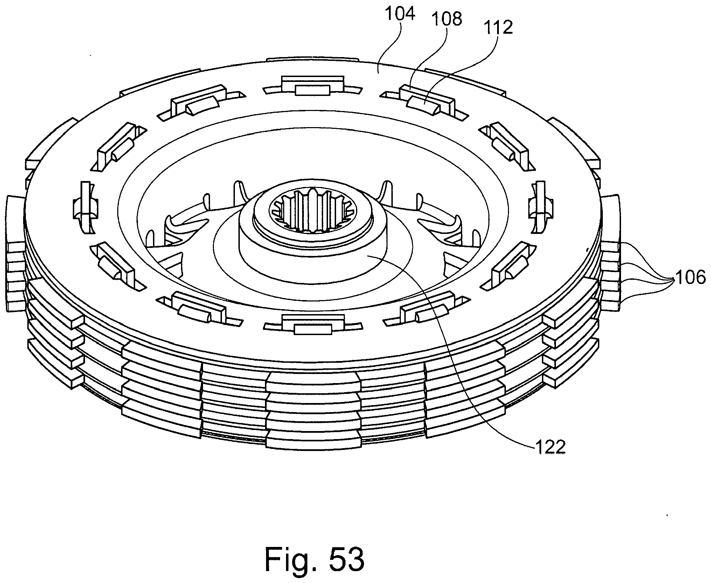

Figur 53 zeigt die Baugruppe von Figur 52 ohne das Primärzahnrad 110 aus der gleichen Perspektive. Die Reibscheiben 106 weisen axial nach außen verlaufende Eingriffselemente zum Einleiten eines Drehmoments auf. Zwischen diesen Eingriffselementen liegen nach der Montage des Außenkorbs 102 dessen axiale Abschnitte. Die Lamellen 108 weisen in axialer Richtung umgebogene Eingriffselemente auf, die derart miteinander verschränkt sind, dass die Eingriffselemente der in Figur 53 obersten Lamelle 108, die durch die Aussparungen des Innenkorbs 104 nach oben ragen, zur Einleitung einer Kraft bzw. eines Drehmoments in sämtliche Lamellen 108 verwendet werden können.

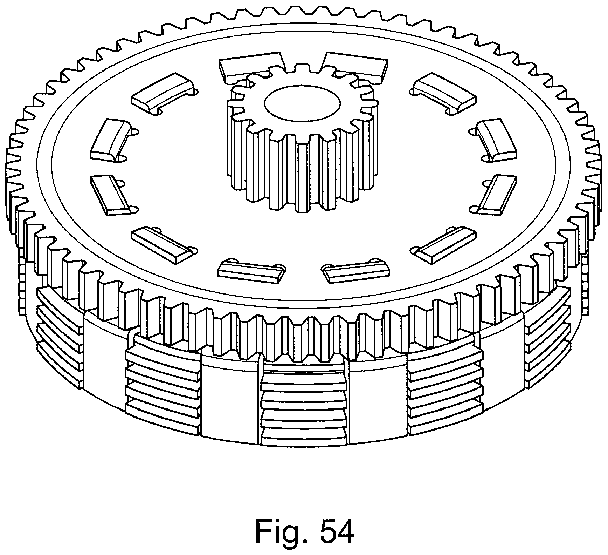

Figur 54 zeigt eine Darstellung ähnlich derer von Figur 52.

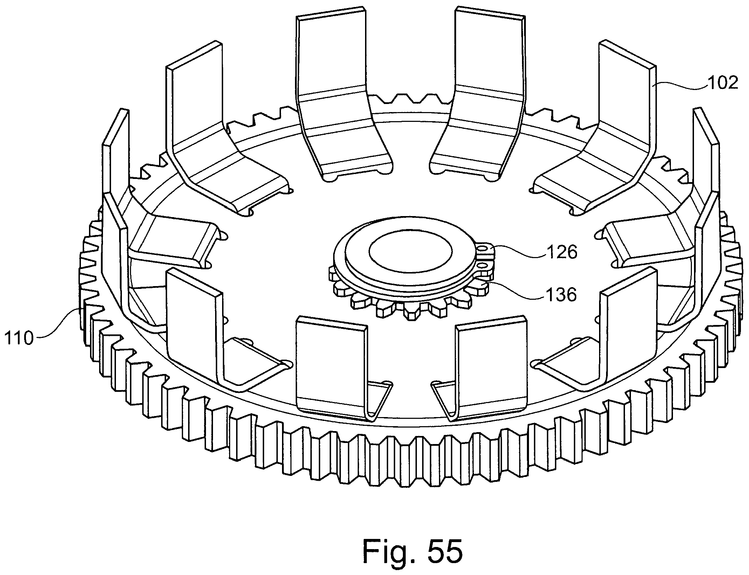

Figur 55 zeigt die Baugruppe von Figur 52 ohne die Reibscheiben 106 und die Lamellen 108 in einer Perspektive entsprechend derer von Figur 51. Die zwölf Biegeelemente des Außenkorbs 102 sind am Primärzahnrad 110 montiert. Das Anlasserzahnrad 136 greift in die korrespondierende Innenverzahnung des Primärzahnrads 110 ein und ist mittels des Sicherungsrings 126 in axialer Richtung gesichert.

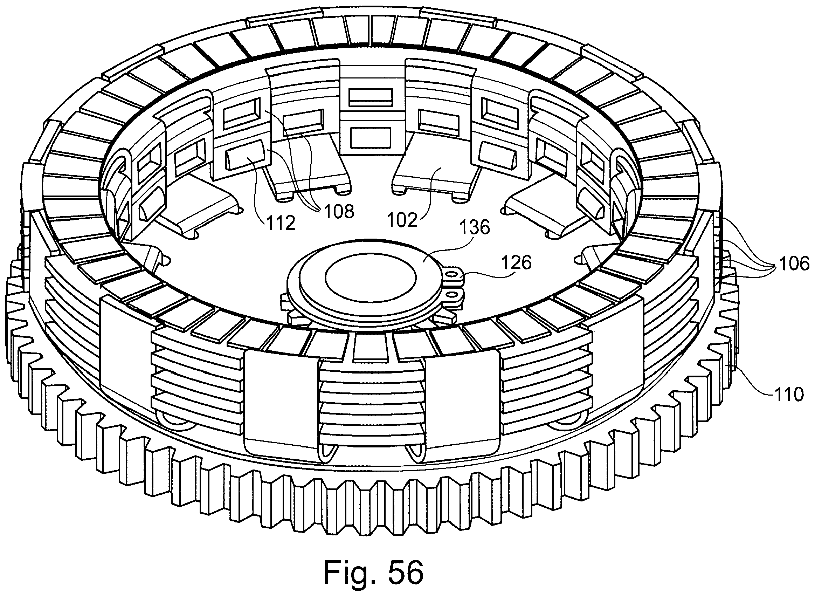

Figur 56 zeigt die Baugruppe von Figur 52 aus einer Perspektive entsprechend derer von Figur 51. Der Innenkorb 104 ist nicht dargestellt, sodass die Ruckdämpfer 112 lediglich in den dafür vorgesehenen Aussparungen der Laschen der untersten Lamelle 108 liegen.

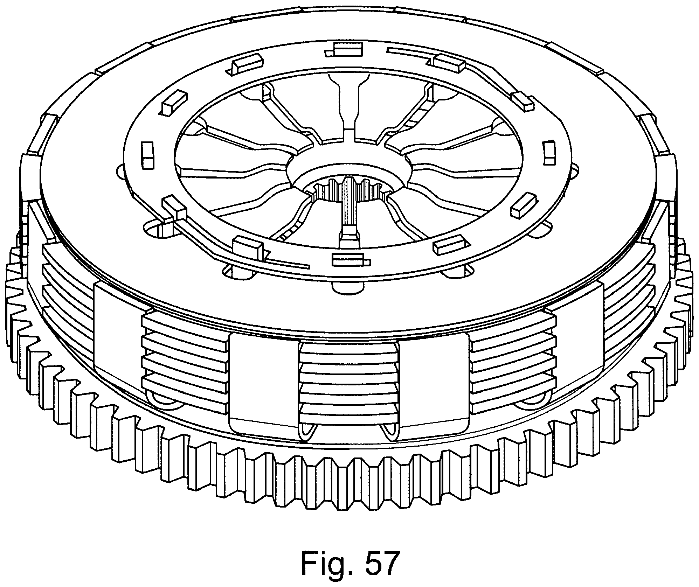

Figur 57 zeigt die Baugruppe von Figur 56 zusammen mit dem Innenkorb 104, der Lamellenfeder 116 und der Abstützscheibe 172 aus einer entsprechenden Perspektive.

### Ausführungsform V11

Die Ausführungsform V11 basiert auf der Ausführungsform V9. Im Unterschied dazu ist der Außenkorb 102 ein Tiefziehteil und das Primärzahnrad 110 ist durch einen Zahnkranz 110 ersetzt.

Figur 58 zeigt die Nasskupplung 100 aus einer Perspektive entsprechend der von Figur 44. Der Außenkorb 102 ist ähnlich geformt wie in der Ausführungsform V1 (vgl. Figur 2). Allerdings ist der Außenkorb 102 tiefgezogen, sodass der radiale Bodenabschnitt des Außenkorbs 102 keine Spalte oder Fugen aufweist. Im Bereich zwischen dem radialen und dem axialen Abschnitt des Außenkorbs 102 ist eine Schulter vorgesehen, in der der Zahnkranz 110 zu liegen kommt. Die Lagerbuchse 124 bzw. das Anlasserzahnrad 136 ist mittels einer Verzahnung drehmomentschlüssig mit dem Außenkorb 102 verbunden und mittels des Sicherungsrings 126 in axialer Richtung am Außenkorb 102 gesichert.

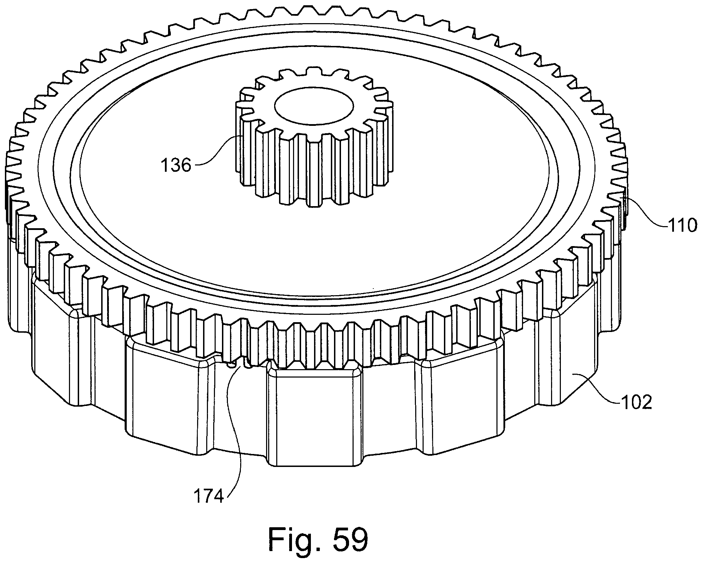

Figur 59 zeigt den Außenkorb 102 zusammen mit dem Zahnkranz 110 und dem Anlasserzahnrad 136 aus einer Perspektive entsprechend derer von Figur 44. Am tiefgezogenen Außenkorb 102 sind drei Zapfen zum axialen Eingriff in korrespondierende Aussparungen des Zahnkranzes 110 vorgesehen, um ein Drehmoment zwischen dem Zahnkranz 110 und dem Außenkorb 102 zu übermitteln. In einer bevorzugten Ausführungsform sind drei solche Zapfen 174 gleichmäßig über den Umfang des Außenkorbs 102 verteilt. Die Zapfen 174 können beispielsweise durch Biegen aus dem tiefgezogenen Außenkorb ausgeformt werden.

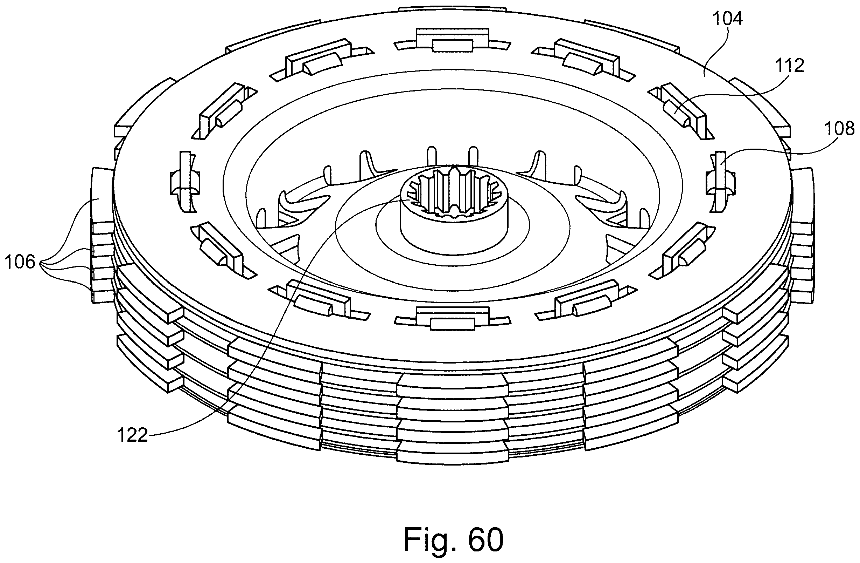

Figur 60 zeigt den Innenkorb 104 mit der Abtriebsnabe 122, den Reibscheiben 106, den Lamellen 108 und den Ruckdämpfern 122. Die dargestellte Baugruppe entspricht im Wesentlichen derer der Ausführungsform V10 (vgl. Figur 53), mit dem Unterschied, dass die Abtriebsnabe 122 einstückig mit dem Innenkorb 104 ausgebildet ist.

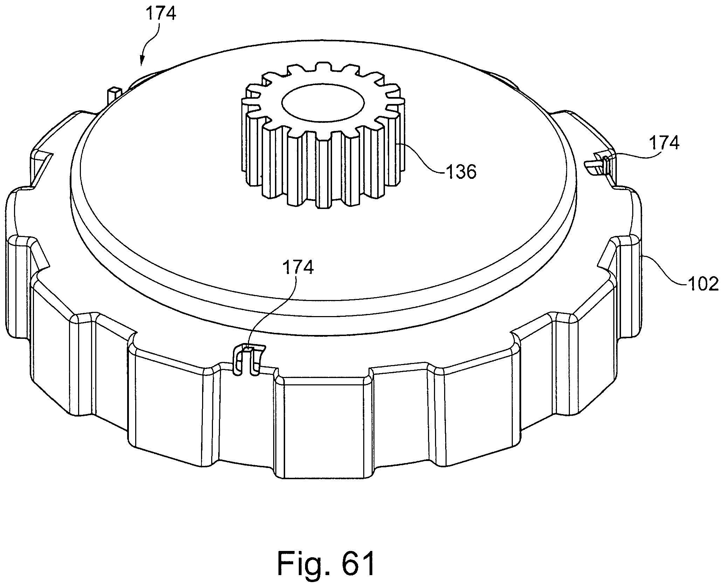

Figur 61 zeigt den Außenkorb 102 mit dem Anlasserzahnrad 136 aus einer Perspektive entsprechend derer von Figur 59. Gut zu erkennen sind die drei über einen Umfang verteilten, sich axial nach oben erstreckenden Zapfen 174. In anderen Ausführungsformen kann auch eine andere Anzahl Zapfen 174 am Außenkorb 102 vorgesehen sein.

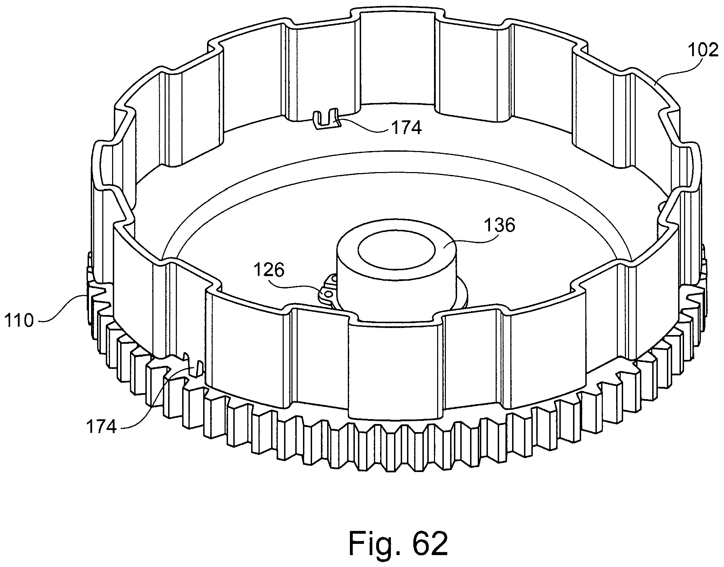

Figur 62 zeigt die Baugruppe von Figur 59 aus einer auf den Kopf gestellten Perspektive.

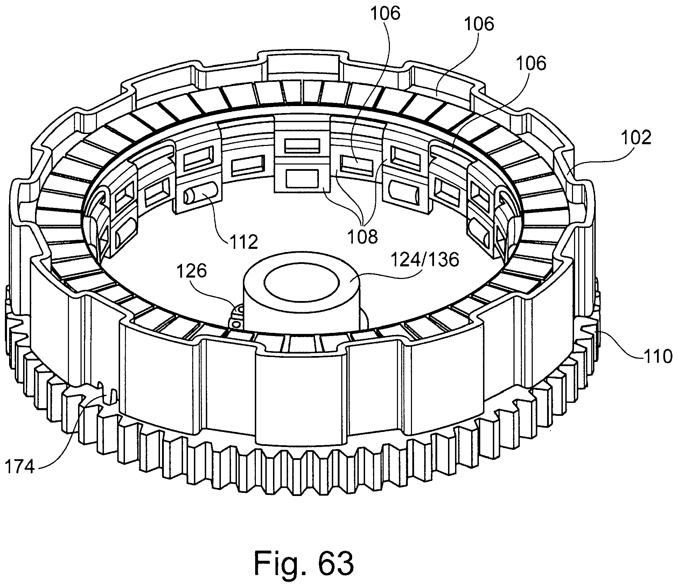

Figur 63 zeigt die Baugruppe von Figur 62 zusammen mit den Reibscheiben 106 und den Lamellen 108. Der Innenkorb 104 ist nicht angebracht, sodass die Ruckdämpfer 112 lediglich in den dafür vorgesehenen Aussparungen der Laschen der untersten Lamelle 108 liegen.

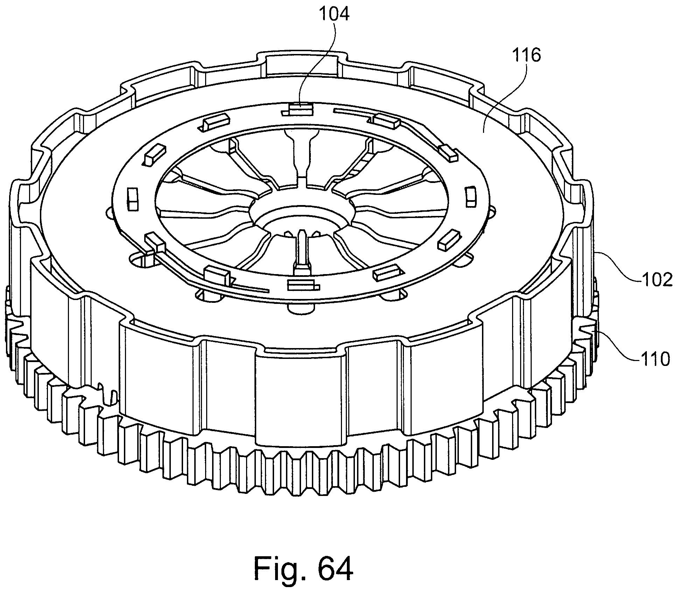

Figur 64 zeigt die Baugruppe von Figur 63 zusammen mit dem Innenkorb 104, der Lamellenfeder 116 und der Abstützscheibe 172. Die Baugruppe unterscheidet sich im Wesentlichen durch den Außenkorb 102 von der in Figur 57 gezeigten Ausführungsform V10.

### Ausführungsform V12

Die Ausführungsform V12 basiert auf der Ausführungsform V11.

Der Außenkorb 102 ist wie in der Ausführungsform V11 tiefgezogen, ist jedoch auf eine andere Weise mit dem Zahnkranz 110 verbunden. Außerdem ist der Außenkorb 102 zur Aufnahme eines außen umlaufenden Drahtrings ausgebildet, der den Stapel von Reibscheiben 106 und Lamellen 108 nach oben abschließt. Am Innenkorb 104 ist ein zusätzliches Halteelement für die Abstützscheibe 172 vorgesehen. Die Abstützscheibe 172 verfügt über einen geänderten Halte- und Sicherungsmechanismus. Die oberste Lamelle 108 ist dazu eingerichtet, die Belagsfederung zu realisieren.

Figur 65 zeigt die Nasskupplung 100 aus einer Perspektive entsprechend der von Figur 58. Der Außenkorb 102 ist tiefgezogen und weist an seinem oberen axialen Ende eine Haltestruktur zur Aufnahme des umlaufenden Drahtrings 178 auf. Der Drahtring 178 schließt die gestapelten Reibscheiben 106 und Lamellen 108 nach oben ab und dient der Abstützung des Außenkorbs 102 unter Fliehkraftbelastung, um eine Berstfähigkeit des Außenkorbs 102 zu erhöhen.

Zur Zentrierung des Zahnkranzes 110 an der Schulter des Außenkorbs 102 sind drei über den Umfang verteilte Laschen 180 am Außenkorb 102 ausgebildet. Nach dem Anbringen des Zahnkranzes 110 am Außenträger 102 werden die Laschen 180 um 90° radial nach außen umgebogen, um den Zahnkranz 110 in axialer Richtung zu fixieren. Es kann auch eine andere Anzahl Laschen 180 am Außenträger 102 vorgesehen sein.

Zur Drehmomentübertragung zwischen dem Außenträger 102 und dem Zahnkranz 110 sind im Bereich der Schulter am Außenträger 102 eine Anzahl Zähne 182 vorgesehen, die in die Außenverzahnung 128 des Zahnkranzes 110 eingreifen.

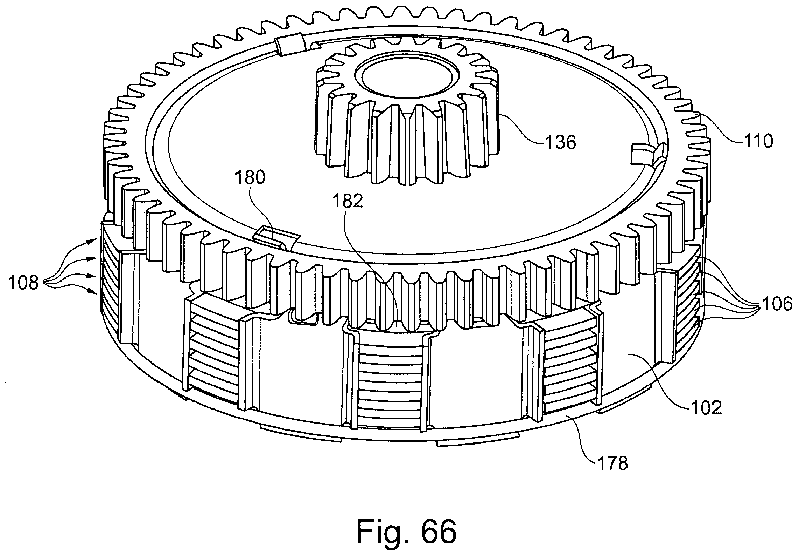

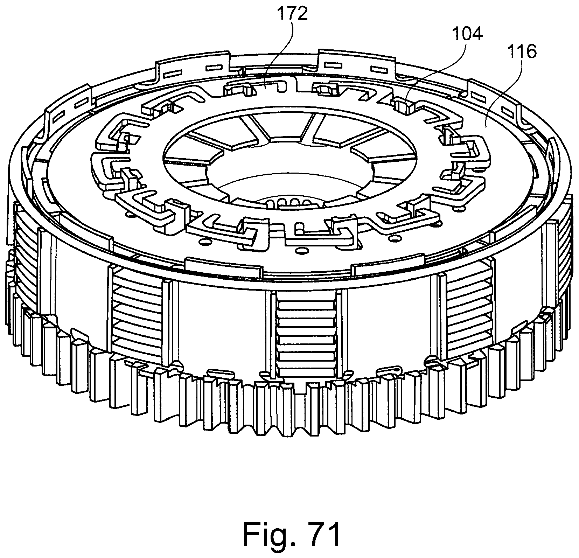

Wie unten mit Bezug auf Figur 66 noch genauer beschrieben wird, ist der Außenkorb 102 in radialer Richtung nicht geschlossen wie in der Ausführungsform V11, sondern offen. Die Abstützscheibe 172 wird unten mit Bezug auf Figur 71 genauer beschrieben.

Das Anlasserzahnrad 136 ist mittels einer Verzahnung mit dem Außenträger 102 drehmomentschlüssig verbunden. Das Anlasserzahnrad 136 weist eine Hohlbohrung auf, in der eine Lagerbuchse liegt. In axialer Richtung erstreckt sich ein unverzahnter Abschnitt des Anlasserzahnrads 136 nach oben bis zum Innenkorb 104. Die Abtriebsnabe 122 ist einstückig am Innenkorb 104 ausgebildet und ragt von oben in die Hohlbohrung des Anlasserzahnrads 136 hinein.

Die oberste Lamelle 108 umfasst eine Anzahl über einen Umfang verteilte Federelemente 184, auf denen die Lamellenfeder 116 aufliegt. Über die Federelemente 184 ist die Belagsfederung der Reibscheiben 104 realisiert.

Zusätzlich in Figur 65 dargestellt ist ein Ausrücklager 186 oberhalb der Lamellenfeder 116.

Figur 66 zeigt den Außenträger 102 mit dem Zahnkranz 110 und dem Anlasserzahnrad 136 sowie den Reibscheiben 106, den Lamellen 108 und dem Drahtring 178. Dabei entspricht die Perspektive derer von Figur 59.

Zu erkennen sind die am Außenkorb 102 ausgebildeten Zähne 182 und Laschen 180. Die Reibscheiben 106 weisen axiale Laschen zur Einleitung eines Drehmoments auf. Im Bereich dieser Laschen ist eine radiale Wand des Außenkorbs 102 unterbrochen. Ein Abschnitt der radialen Wand des Außenkorbs 102 ist an jeder Seite der übereinanderliegenden Laschen der Reibscheiben 106 radial nach außen gebogen, um eine Krafteinleitung zu verbessern. Durch die Unterbrechungen in der radialen Wand des Außenkorbs 102 ist dieser nicht geschlossen, wie der Außenkorb 102 der Ausführungsform V11, sondern offen.

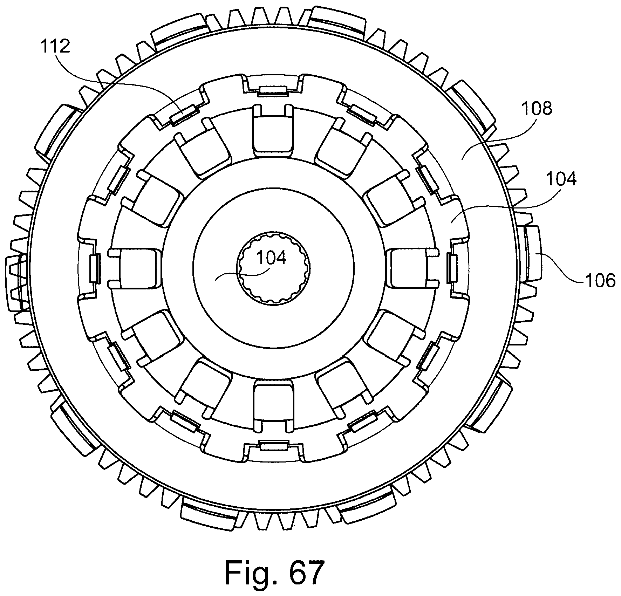

Figur 67 zeigt den Innenkorb 104 zusammen mit den Reibscheiben 106, den Lamellen 108 und den Ruckdämpfern 112.

Die Reibscheiben 106 umfassen radial nach außen verlaufende Laschen zur Einleitung eines Drehmoments (vgl. Figur 66). Korrespondierende Laschen der Lamellen 108 sind auf der radialen Innenseite der Lamellen 108 angebracht. Dabei sind die Laschen in axialer Richtung umgebogen und die Laschen benachbarter Lamellen 108 sind derart miteinander verschränkt, dass ein Drehmoment zwischen den Lamellen 108 übertragen werden kann.

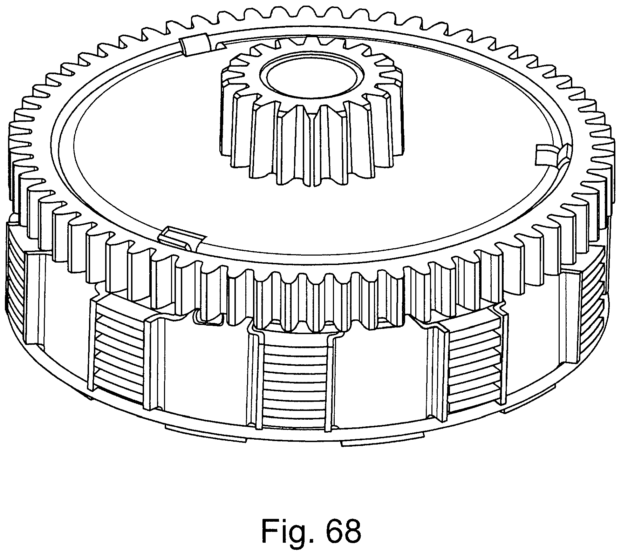

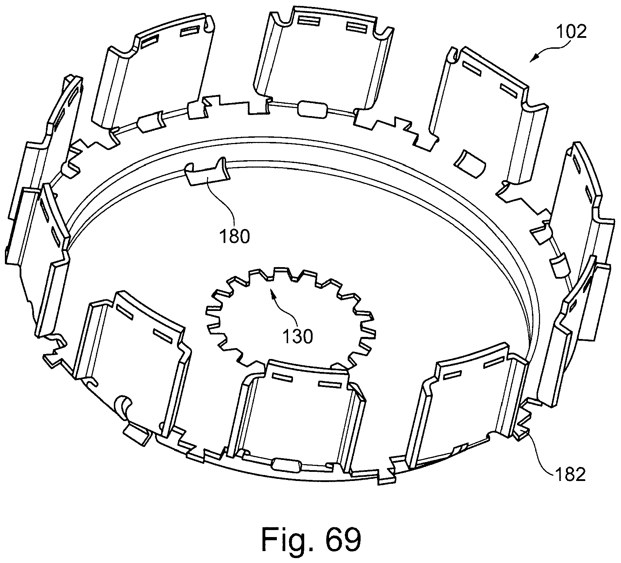

Figur 68 zeigt eine Darstellung ähnlich der von Figur 66. Figur 69 zeigt den Außenträger 102 aus einer Perspektive ähnlich der von Figur 65. Es ist zu erkennen, wie eine Auflage für den Drahtring 178 durch die nach außen gebogenen Abschnitte des Außenkorbs 102 gebildet ist. Diese Auflage stützt den Drahtring 178 axial nach unten. Auf einer radialen Innenseite liegt der Drahtring 178 an axialen Endabschnitten der radialen Wand des Außenkorbs 102 an.

Figur 69 zeigt den Außenträger 102 ohne weitere Bauelemente der Nasskupplung 100 aus einer Perspektive entsprechend derer von Figur 62. Die Innenverzahnung 130 ist zur Drehmomentübertragung an das Anlasserzahnrad 136 vorgesehen. Gut erkennbar sind auch die drei Laschen 180 zum axialen Eingriff in korrespondierende Aussparungen des Zahnkranzes 110 und die 10 radialen Zähne 182 zum Eingriff mit Zähnen der Außenverzahnung 128 des Zahnkranzes 110.

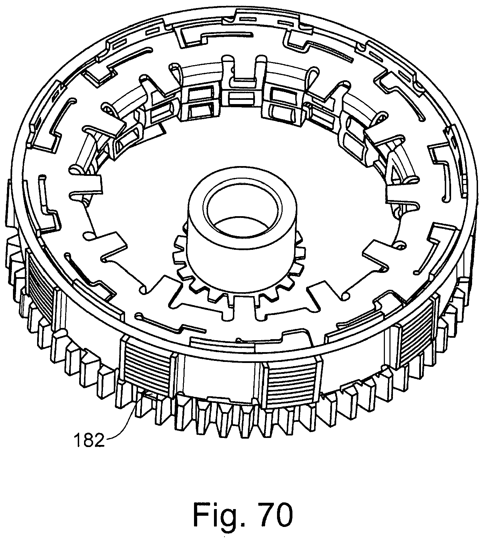

Figur 70 zeigt die Baugruppe von Figur 68 aus einer auf den Kopf gestellten Perspektive.

Figur 71 zeigt die Baugruppe von Figur 70 mit zusätzlich angebrachtem Innenkorb 104, Lamellenfeder 116 und Abstützscheibe 172.

Die Abstützscheibe 172 umfasst eine Anzahl sich in radialer Richtung nach außen erstreckender, U-förmiger Federarme, wobei nur ein Ende jedes Federarms mit einem radialen Innenbereich der Abstützscheibe 172 verbunden ist. Jeder Federarm ist in axialer Richtung derart gebogen, dass der im belastungsfreien Zustand axial nach oben orientiert ist. Der Dreierschenkel jedes Federelements greift in die dafür vorgesehenen Nuten des Innenträgers 104 ein, sodass die Abstützscheibe 172 in axialer Richtung gesichert ist. Durch die Federkraft der Federelemente wird dabei eine axiale Vorspannung zwischen dem Innenkorb 104 und der Lamellenfeder 116 ausgeübt. Durch die Vorspannung wird ein zur erwartender Verschleiß innerhalb der Lagerstelle zwischen der Lamellenfeder 116 und dem Innenkorb 104 kompensiert. Über eine Lebensdauer der Nasskupplung 100 kann somit eine spielfreie Lagerung realisiert sein.

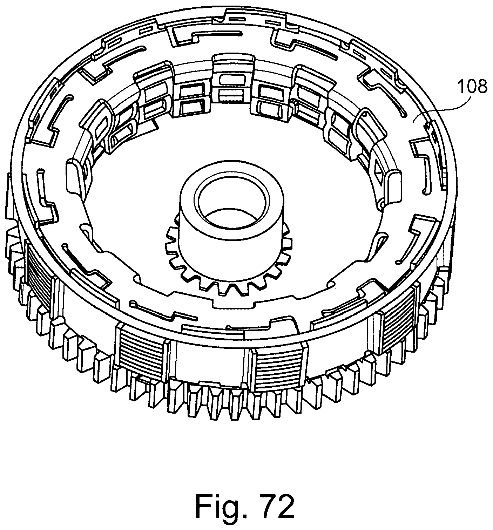

Figur 72 zeigt eine Darstellung ähnlich derer von Figur 70. Die zu oberst dargestellte Lamelle 108 weist eine Anzahl sich radial nach innen erstreckender Laschen auf.

### Bezugszeichenliste

- 100: Nasskupplung
- 102: Außenkorb
- 104: Innenkorb
- 106: Reibscheiben
- 108: Lamellen
- 110: Primärzahnrad
- 112: Ruckdämpfer
- 114: Bodenplatte
- 116: Lamellenfeder
- 118: Stützdraht
- 120: Abschlussdraht
- 122: Abtriebsnabe
- 124: Lagerbuchse
- 126: Sicherungsring
- 128: Außenverzahnung
- 130: Innenverzahnung
- 132: Aufnahme
- 133: Aufnahme
- 134: Außenverzahnung
- 136: Anlasserzahnrad
- 138: Laschen
- 140: Steg
- 142: Innenträger
- 144: oberer Abschnitt
- 148: Profile
- 150: Steg
- 152: Schraube
- 154: Steg
- 156: Lasche
- 158: Niete
- 160: Schulter
- 162: Zentriersteg
- 164: Speiche
- 166: Schraubbolzen
- 168: Grundplatte
- 170: Stehbolzen
- 172: Abstützscheibe
- 174: Zapfen
- 178: Drahtring
- 180: Lasche
- 182: Zahn
- 184: Federelement
- 186: Ausrücklager

## Patentansprüche

1. Nasskupplung (100) für ein Kraftrad, wobei die Nasskupplung (100) folgende Elemente umfasst:
- einen Außenkorb (102) mit einer ersten Verzahnung (128) als Eingangsseite der Nasskupplung (100);
- einen zum Außenkorb (102) koaxialen Innenkorb (104) mit einer zweiten Verzahnung als Ausgangsseite der Nasskupplung (100);
- erste Reibelemente (106), die drehmomentschlüssig mit dem Außenkorb (102) verbunden sind;
- zweite Reibelemente (108), die drehmomentschlüssig mit dem Innenkorb (104) verbunden sind;
- wobei die ersten und zweiten Reibelemente (106, 108) axial alternierend zwischen dem Innenkorb (104) und dem Außenkorb (102) angeordnet sind;
- ein Anpresselement (116) zum axialen Komprimieren der ersten und zweiten Reibelemente (106, 108), um einen Drehmomentschluss zwischen der Eingangsseite und der Ausgangsseite herzustellen;
**dadurch gekennzeichnet, dass**
- der Innenkorb (104) und/oder der Außenkorb (102) ein aus einem Blechteil hergestelltes Tiefziehteil ist bzw. sind.

2. Nasskupplung (100) nach Anspruch 1 wobei ein Anlasserzahnrad (136) koaxial formschlüssig mit dem Außenkorb (102) verbunden ist.

3. Nasskupplung (100) nach Anspruch 2 wobei das Anlasserzahnrad (136) integriert mit einer Gleitlagerbuchse (124) zur Lagerung des Außenkorb (102)s ausgeführt ist

4. Nasskupplung (100) nach einem der vorangehenden Ansprüche, wobei das Anpresselement eine Membranfeder (116) umfasst.

5. Nasskupplung (100) nach einem der vorangehenden Ansprüche, wobei ein elastisches Element (112) zur drehelastischen Verbindung des Außenkorbs (102) mit dem zugeordneten Verzahnungselement (110) vorgesehen ist.

6. Nasskupplung (100) nach Anspruch 5 wobei das elastische Element (112) eine Anzahl radialer Blechlaschen (138) umfasst

7. Nasskupplung (100) nach einem der vorangehenden Ansprüche, wobei der Außenkorb (102) einen zusätzlichen umlaufenden Ring (178) zur Abstützung unter Fliehkraftbelastung umfasst.

8. Nasskupplung (100) nach einem der vorangehenden Ansprüche, wobei eine Einrichtung (108) zur Erzeugung einer Vorspannung auf das Anpresselement (116) vorgesehen ist, um eine verschleißbedingte Höhenabnahme der gestapelten Reibelemente (106, 108) zu kompensieren.

## Claims

1. Wet clutch (100) for a motorcycle, the wet clutch (100) comprising the following elements:
- an outer basket (102) with a first toothing system (128) as the input side of the wet clutch (100);
- an inner basket (104), which is coaxial with respect to the outer basket (102), with a second toothing system as the output side of the wet clutch (100);
- first friction elements (106) which are connected in a torque-transmitting manner to the outer basket (102);
- second friction elements (108) which are connected in a torque-transmitting manner to the inner basket (104);
- the first and second friction elements (106, 108) being arranged in an axially alternating manner between the inner basket (104) and the outer basket (102);
- a pressing element (116) for the axial compression of the first and second friction elements (106, 108), in order to establish a torque-transmitting connection between the input side and the output side;
**characterized in that**
- the inner basket (104) and/or the outer basket (102) are/is a deep-drawn part which is manufactured from a sheet metal part.

2. Wet clutch (100) according to Claim 1, a starter gearwheel (136) being connected in a coaxially positively locking manner to the outer basket (102).

3. Wet clutch (100) according to Claim 2, the starter gearwheel (136) being configured in an integrated manner with a plain bearing bush (124) for mounting the outer basket (102).

4. Wet clutch (100) according to one of the preceding claims, the pressing element comprising a diaphragm spring (116).

5. Wet clutch (100) according to one of the preceding claims, an elastic element (112) being provided for the rotationally elastic connection of the outer basket (102) to the associated toothing element (110).

6. Wet clutch (100) according to Claim 5, the elastic element (112) comprising a number of radial sheet metal lugs (138).

7. Wet clutch (100) according to one of the preceding claims, the outer basket (102) comprising an additional circumferential ring (178) for support under centrifugal force loading.

8. Wet clutch (100) according to one of the preceding claims, a device (108) for generating a prestress on the pressing element (116) being provided, in order to compensate for a wear-induced height decrease of the stacked friction elements (106, 108).

## Revendications

1. Embrayage humide (100) pour une motocyclette, dans lequel l'embrayage humide (100) comprend les éléments suivants:
- un panier extérieur (102) avec une première denture (128) comme côté d'entrée de l'embrayage humide (100);
- un panier intérieur (104) coaxial au panier extérieur (102), avec une deuxième denture comme côté de sortie de l'embrayage humide (100);
- des premiers éléments de friction (106), qui sont assemblés pour la transmission de couples de rotation au panier extérieur (102);
- des deuxièmes éléments de friction (108), qui sont assemblés pour la transmission de couples de rotation au panier intérieur (104);
- dans lequel les premiers et les deuxièmes éléments de friction (106, 108) sont disposés axialement en alternance entre le panier intérieur (104) et le panier extérieur (102);
- un élément de pression (116) pour comprimer axialement les premiers et les deuxièmes éléments de friction (106, 108) afin de réaliser une liaison de transmission de couples de rotation entre le côté d'entrée et le côté de sortie;
**caractérisé en ce que**
- le panier intérieur (104) et/ou le panier extérieur (102) est/sont une pièce emboutie produite à partir d'une pièce de tôle.

2. Embrayage humide (100) selon la revendication 1, dans lequel un pignon de démarreur (136) est assemblé coaxialement par emboîtement au panier extérieur (102).

3. Embrayage humide (100) selon la revendication 2, dans lequel le pignon de démarreur (136) est réalisé de façon intégrée avec un coussinet de palier lisse (124) pour le support du panier extérieur (102).

4. Embrayage humide (100) selon l'une quelconque des revendications précédentes, dans lequel l'élément de pression comprend un ressort à diaphragme (116).

5. Embrayage humide (100) selon l'une quelconque des revendications précédentes, dans lequel il est prévu un élément élastique (112) pour la liaison élastique rotative du panier extérieur (102) avec l'élément de denture associé (110).

6. Embrayage humide (100) selon la revendication 5, dans lequel l'élément élastique (112) comprend un nombre de pattes de tôle radiales (138).

7. Embrayage humide (100) selon l'une quelconque des revendications précédentes, dans lequel le panier extérieur (102) comprend un anneau périphérique additionnel (178) pour le soutien sous une mise en charge par une force centrifuge.

8. Embrayage humide (100) selon l'une quelconque des revendications précédentes, dans lequel il est prévu un dispositif (108) pour produire une précontrainte sur l'élément de pression (116), afin de compenser une diminution de la hauteur des éléments de friction empilés (106, 108) causée par l'usure.
